(19) Europäisches Patentamt
European Patent Office
Office européen des brevets

(11) EP 2 860 196 A1

(12) **EUROPÄISCHE PATENTANMELDUNG**

(43) Veröffentlichungstag:
**15.04.2015 Patentblatt 2015/16**

(51) Int Cl.:
***C08C 1/14*** *(2006.01)* ***C08K 5/37*** *(2006.01)*
***C08F 36/06*** *(2006.01)*

(21) Anmeldenummer: **13290246.1**

(22) Anmeldetag: **14.10.2013**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **LANXESS Deutschland GmbH
50569 Köln (DE)**

(72) Erfinder:
- **Brandau, Sven
67000 Strasbourg (FR)**
- **Kaiser, Andreas
67000 Strasbourg (FR)**
- **Magg, Hans
51515 Kürten (DE)**
- **Westeppe, Uwe
67610 La Wantzenau (FR)**

(54) **Nitrilkautschuke mit niedrigen Emissionswerten**

(57) Durch ein verbessertes Polymerisationsverfahren unter Einsatz eines speziellen Molekulargewichtsreglers lassen sich neue Nitrilkautschuke herstellen, die sich durch besonders niedrige Emissionswerte auszeichnen und zu Vulkanisaten mit einem vorteilhaften Eigenschaftsprofil führen, die insbesondere in geruchssensitiven Anwendungen von hervorragender Qualität sind.

EP 2 860 196 A1

## Beschreibung

Die Erfindung betrifft einen Nitrilkautschuk mit niedrigen Emissionswerten, ein Verfahren zu dessen Herstellung, vulkanisierbare Mischungen enthaltend diesen Nitrilkautschuk, ferner ein Verfahren zur Herstellung von Vulkanisaten aus diesen Mischungen sowie die dabei erhaltenen Vulkanisate.

Unter Nitrilkautschuken, abgekürzt auch als "NBR" bezeichnet, werden Kautschuke verstanden, bei denen es sich um Co- oder Terpolymere aus mindestens einem $\alpha,\beta$-ungesättigten Nitrilmonomeren, mindestens einem konjugierten Dien und gegebenenfalls einem oder mehreren weiteren copolymerisierbaren Monomeren handelt. Derartige Nitrilkautschuke und Verfahren zur Herstellung solcher Nitrilkautschuke sind bekannt, siehe z.B. Ullmann's Encyclopedia of Industrial Chemistry, VCH Verlagsgesellschaft, Weinheim, 1993, S. 255-261.

NBR wird typischerweise durch Emulsionspolymerisation hergestellt, wobei zunächst ein NBR-Latex erhalten wird. Der NBR-Feststoff wird aus diesem Latex durch Koagulation isoliert, meist unter Einsatz von. Salzen oder Säuren. Die Emulsionspolymerisation wird dabei üblicherweise unter Einsatz von Molekulargewichtsreglern durchgeführt. Häufig eingesetzte Molekulargewichtsregler basieren auf Mercaptanen. Zur Molekulargewichtsregelung von Emulsionskautschuken auf der Basis von Monomeren wie Styrol, Butadien, Acrylnitril, (Meth)acrylsäure, Fumarsäure, Ethylacrylat, Butylacrylat, 2-Ethylhexylacrylat, Chloropren und anderen ist insbesondere die Verwendung von Dodecylmercaptanen von Bedeutung.

In US-A-2,434,536 wird beschrieben, dass synthetische Kautschuke auf Basis von Diolefinen wie z.B. Butadien und gegebenenfalls weiteren copolymerisierbaren Monomeren wie z.B. Styrol, $\alpha$-Methylstyrol, Vinylnaphthalin, Acrylnitril, Methacrylnitril, Methylmethacrylat, Ethylfumarat oder Methylvinylketon durch Emulsionspolymerisation in Gegenwart von aliphatischen Mercaptanen als Molekulargewichtsreglern hergestellt werden. Offenbart wird, dass diese Mercaptane mindestens 7 und bevorzugt 10 oder mehr Kohlenstoff-Atome aufweisen. Bevorzugt werden aliphatische Mercaptane mit einem mittleren Molekulargewicht von 188 bis 230 eingesetzt, welche mindestens 50% Dodecylmercaptan und den restlichen Anteil zu 100% in Form von Mercaptanen mit 10 bis 16 Kohlenstoffatomen aufweisen.

In Ullmanns Enzyklopädie der technischen Chemie, 4. Auflage, Band 13, Seite 611-612 wird allgemein beschrieben, dass das Molekulargewicht von Nitril-Butadien-Kautschuken durch den Einsatz von Alkylmercaptanen, Di- und Polysulfiden oder Xanthogendisulfiden geregelt werden kann. tert-Dodecylmercaptan sowie Diisopropylxanthogendisulfide werden als hauptsächlich eingesetzte Regler genannt.

Auch in der industriellen Praxis werden häufig tertiäre Docdecylmercaptane eingesetzt (auch als "TDM" oder "TDDM" abgekürzt). Bekannt ist beispielsweise das von Chevron Philipps käuflich erhältliche TDM, welches in der Regel aus einer großen Mischung verschiedenster Isomere besteht. Für verschiedenste Anwendungen wie z.B. Bodenbelägen aus Nitrilkautschuk ist es relevant, ob und in welchem Umfang aus Vulkanisaten, die auf Basis Nitrilkautschuk hergestellt werden, flüchtige Substanzen ausgasen. Eigene Untersuchungen ergaben, dass Nitrilkautschuke, die unter Einsatz von TDM hergestellt werden, in VOC Tests (durchgeführt mittels TDS-GC/MS Untersuchungen nach VDA 278 Empfehlung 09.2002) einen hohen Anteil an Schwefelverbindungen und darüber hinaus nicht-Schwefel haltige Verunreinigungen des TDMs aufweisen. Je nach Anwendungsmodus und -zweck können diese im praktischen Gebrauch ausgasen und zu wahrnehmbaren, unangenehmen bis hin zu inakzeptablen Geruchsbelästigungen führen.

Während es über den Einfluss der zur Latexkoagulation einsetzbaren Salze auf die Eigenschaften des erhaltenen NBRs umfangreiche Literatur gibt, finden sich keine Hinweise oder Untersuchungen zum Einfluss der Molekulargewichtsregler auf die Gehalte flüchtiger Bestandteile in Nitrilkautschuken.

Aus DD 154 702 ist ein Verfahren zur radikalischen Copolymerisation von Butadien und Acrylnitril in Emulsion bekannt, das über ein spezielles, zweckmäßigerweise computergestütztes Dosierprogramm für die Monomere sowie den Molekulargewichtsregler, wie z.B. tert.Dodecylmercaptan, gesteuert wird und bei dem die erhaltenen Latices durch Koagulation im sauren Medium zum Festkautschuk aufgearbeitet werden. Als wesentlicher Vorteil des Verfahrens wird ausgeführt, dass die als Emulgatoren eingesetzten Harz- und/oder Fettsäureseifen durch die Verwendung von Säuren bei der Koagulation im Kautschuk verbleiben, also nicht wie bei anderen Verfahren ausgewaschen werden. Hierfür wird neben dem Vorteil guter Eigenschaften des NBR besonders die Verbesserung der Ökonomie des Verfahrens und die Vermeidung der Abwasserbelastung durch ausgewaschenen Emulgator reklamiert. Für die erhaltenen Butadien-Acrylnitril-Copolymerisate mit 10-30 Gew.% Acrylnitril wird ausgeführt, dass sie sich durch gute Elastizitäts- und Tieftemperatur-Eigenschaften kombiniert mit einer erhöhten Quellbeständigkeit und eine vorteilhafte Verarbeitbarkeit auszeichnen. Maßnahmen, durch die eine Beeinflussung der VOC Werte des Nitrilkautschuks sowie des Eigenschaftsprofils des vulkanisierten NBR möglich ist, können der Lehre dieses Patents nicht entnommen werden.

In EP-A-0 692 496, EP-A-0 779 301 und EP-A-0 779 300 werden jeweils Nitrilkautschuke auf Basis eines ungesättigten Nitrils und eines konjugierten Diens beschrieben, denen gemeinsam ist, dass sie 10-60 Gew.% ungesättigtes Nitril und eine Mooney-Viskosität im Bereich von 15-150 bzw. gemäß EP-A-0 692 496 von 15-65 besitzen und alle mindestens 0,03 mol einer $C_{12}$-$C_{16}$-Alkylthio-Gruppe pro 100 mol Monomer-Einheiten aufweisen, wobei diese Alkylthiogruppe mindestens drei tertiäre C-Atome einschließt und ein Schwefel-Atom, das direkt an mindestens eines der tertiären C-Atome gebunden ist. Die Herstellung der Nitrilkautschuke erfolgt jeweils in Gegenwart eines entsprechend

aufgebauten $C_{12}$-$C_{16}$-Alkylthiols als Molekulargewichtsregler, der als "Chain transfer agent" fungiert und somit als Endgruppe in die Polymerketten eingebaut wird.

Für die Nitrilkautschuke gemäß EP-A-0 779 300 wird ausgeführt, dass sie eine Breite "ΔAN" (AN steht für Acrylnitril) der Zusammensetzungsverteilung des ungesättigten Nitrils im Copolymer im Bereich von 3 bis 20 besitzen. Das Verfahren zu ihrer Herstellung unterscheidet sich von dem der EP-A-0692496 dadurch, dass nur 30-80 Gew.% der gesamten Monomermenge zu Polymerisations-beginn eingesetzt werden und die restliche Monomermenge erst bei einem Umsatz der Polymerisation von 20-70 Gew.% zudosiert wird.

Für die Nitrilkautschuke gemäß EP-A-0 779 301 wird ausgeführt, dass sie 3-20 Gew.% einer Fraktion mit niedrigem Molekulargewicht mit einem zahlenmittleren Molekulargewicht $M_n$ kleiner 35.000 aufweisen. Das Verfahren zu ihrer Herstellung unterscheidet sich von dem der EP-A-0 692 496 dadurch, dass nur 10-95 Gew.% des Alkylthiols vor der Polymerisation in das Monomerengemisch eingemischt werden und die restliche Menge des Alkylthiols erst bei Erreichen eines Polymerisationsumsatzes von 20-70 Gew.% zudosiert wird.

Für die Herstellung der Nitrilkautschuke ist es gemäß EP-A-0 692 496, EP-A-0 779 300 sowie EP-A-0 779 301 jeweils essentiell, dass als Molekulargewichtsregler Alkylthiole in Form der Verbindungen 2,2,4,6,6-Pentmethylheptan-4-thiol und 2,2,4,6,6,8,8-Heptamethylnonan-4-thiol eingesetzt werden. Hierbei wird darauf hingewiesen, dass bei Einsatz des herkömmlichen bekannten tert.Dodecyl-mercaptans als Regler Nitrilkautschuke mit schlechteren Eigenschaften erhalten werden.

<u>**2,2,4,6,6-Pentamethylheptanthiol-4**</u>

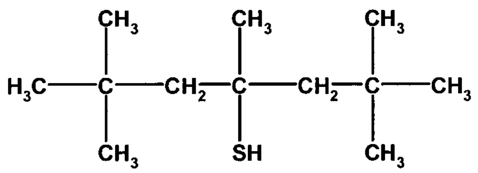

<u>**2,2,4,6,6,8,8-Heptamethylnonanthiol-4**</u>

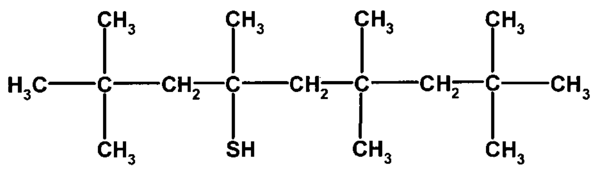

Für die in EP-A-0 692 496, EP-A-0 779 300 sowie EP-A-0 779 301 hergestellten Nitrilkautschuke wird geltend gemacht, dass sie ein vorteilhaftes Eigenschaftsprofil besitzen, eine gute Verarbeitbarkeit der Kautschukmischungen und eine niedrige Formverschmutzung bei der Verarbeitung ermöglichen. Die erhaltenen Vulkanisate sollen eine gute Kombination von Tieftemperatur- und Ölbeständigkeit besitzen und über gute mechanische Eigenschaften verfügen. Hervorgehoben wird ferner die hohe Produktivität des Herstellungsverfahrens bedingt durch hohe Polymerisationsumsätze von größer 75%, bevorzugt größer 80%, die hohe Vulkanisationsgeschwindigkeit bei der Vulkanisation mit Schwefel bzw. Peroxiden, insbesondere bei NBR-Typen für die Spritzgussverarbeitung, eine kurze Anvulkanisationszeit der Nitrilkautschuke und eine hohe Vernetzungsdichte. Weder in der EP-A-0 692 496, EP-A- 0 779 300 noch in der EP-A-0 779 301 werden Hinweise gegeben, ob und welchen Einfluss die eingesetzten Molekulargewichtsregler auf die Eigenschaften des NBRs und dessen Emissionsverhalten haben.

Aus WO-A-2001/094432 sind spezielle verzweigte Nitrilkautschuke bekannt, die bei einem Gehalt an gebundenem ungesättigten Nitril von 15 bis 50 Gew.% und einer Mooney Viskosität (ML 1+4 bei 100°C) im Bereich von 15 bis 150 Mooney Einheiten eine Kettenverzweigung im Bereich von 0 bis 20° (bestimmt durch den sogenannten $\Delta\delta_B$-Wert) besitzen sowie eine Löslichkeit gemessen in Methylethylketon bei 20°C von ≥85 Gew.-%. Diese Nitrilkautschuke werden bereitgestellt, indem die Polymerisation unter Einsatz eines Molekulargewichtsreglers erfolgt, wobei der Regler nicht in einer Charge, d.h. auf einmal, dem Polymerisationsansatz zugegeben wird, sondern in mindestens zwei Stufen, bevorzugt drei und mehr Stufen, jedoch auch eine kontinuierliche Zugabe über die gesamte Polymerisationszeit möglich ist. Laut WO-A-2001/094432 können verschiedene Kettenregler eingesetzt werden, wie sie in EP 0 799 300 B 1 auf Seite 3, Zeilen 51-58 sowie Seite 4, 3. Absatz erwähnt sind. Hervorgehoben werden Alkylthiole, wie 2,4,4-Trimethylpentan-2-thiol, 2,2', 4,4',6,6'-Pentamethylheptan-4-thiol, 2,2',4,4',6,6',8,8'-Heptamethylnonan-4-thiol sowie deren Mischungen.

Aus WO-A-2008/142042 , WO-A-2008/142035 sowie WO-A-2008/142039 sind jeweils Verfahren bekannt, durch die spezielle NBR Kautschuke mit besonderen Ionengehalten und Ionenkennzahlen und damit verbunden speziellen Eigenschaften sowohl im Kautschuk als auch in entsprechenden Vulkanisaten hergestellt werden. In diesen Verfahren können spezielle Dodecylmercaptane wie z.B. das in der WO-A-2008/142037 beschriebene zur Molekulargewichtsregelung eingesetzt werden. Entsprechend finden sich Bruchstücke der eingesetzten Reglersubstanzen in den Polymerketten wieder.

In J. Appl. Polym. Sci. 1968, Vol. 12, 1075-1095 wurde die Herstellung von Butadien/Acrylnitril Copolymeren in Gegenwart unterschiedlicher primärer, sekundärer und tertiärer Mercaptane untersucht. Im Fokus stand die Güte der Mercaptane im Hinblick auf ihre Fähigkeit, das Molekulargewicht und die Mooney Viskosität der Polymere zu regeln. Die schlechtesten Ergebnisse wurden mit n-Alkylmercaptane erreicht. Sekundäre Mercaptane wie 2-Nonylmercaptan,

2-Decylmercaptan und Mischungen erwiesen sich dagegen bei niedrigen Temperaturen (5°C) als effizientere Regler. Tertiäre $C_7$ bis $C_{13}$-Mercaptane zeigten die besten Ergebnisse. Optimale Transferkonstanten für ein 70/30 bzw. 80/20 Butadien/Acrylnitril Copolymer wurden bei einer Polymerisation bei 5°C erhalten. Bei Einsatz von tert. Nonylmercaptan wurde bis zu einem Umsatz von maximal 59% polymerisiert. Es wird keinerlei Hinweis gegeben, ob und welchen Einfluss die untersuchten Reglersubstanzen auf den Gehalt flüchtiger Substanzen in den hergestellten Butadien/Acrylnitril-Kautschuken haben und inwieweit ein Einfluss auf die sonstigen Eigenschaften der Kautschuke sowie darauf basiserender Vulkanisate gegeben ist.

Zusammenfassend ist festzustellen, dass bis heute noch keine Massnahmen bekannt geworden sind, wie man unter Einsatz von Mercaptanen als Molekulargewichtsreglern Nitrilkautschuke erhält, die einen deutlich verringerten Gehalt flüchtiger Substanzen zeigen und gleichzeitig ein unverändert gutes Eigenschaftsprofil aufweisen, insbesondere bezüglich der Vulkanisateigenschaften.

Die **Aufgabe der vorliegenden Erfindung** bestand somit darin, Nitrilkautschuke bereitzustellen, die bei der nachfolgenden Verarbeitung zu Vulkanisaten mit gutem Eigenschaftsprofil führen und gleichzeitig ein deutlich verbessertes Emissionsverhalten gegenüber Nitrilkautschuken haben, die ausschließlich unter Verwendung des großtechnisch üblicherweise eingesetzten Molekulargewichtsreglers TDM hergestellt werden.

Es wurde überraschenderweise gefunden, dass man Nitrilkautschuke mit einem sehr guten Vulkanisationsverhalten und verbessertem Emissionsverhalten erhält sowie darauf basierende Vulkanisate mit exzellenten Vulkanisateigenschaften, wenn die Emulsionspolymerisation unter Wahl spezieller Molekulargewichtsregler durchgeführt und gleichzeitig die Polymerisation bis zu einem Umsatz von 60% oder höher geführt wird.

**Gegenstand der vorliegenden Erfindung** ist somit ein **Nitrilkautschuk,** der Wiederholungseinheiten mindestens eines $\alpha,\beta$-ungesättigten Nitril-Monomeren und mindestens eines konjugierten Dien-Monomeren enthält und der einen **Emissionsquotienten E** gemäß der Formel (I) von kleiner oder gleich 0,25 mg/(kg*Mooney Einheiten) aufweist,

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den Gehalt des $\alpha,\beta$-ungesättigten Nitrils im Nitrilkautschuk in Gew.%, bestimmt gemäß DIN 53 625 nach Kjeldahl, darstellt. |

**Gegenstand der vorliegenden Erfindung** ist ferner ein **Verfahren zur Herstellung von Nitrilkautschuken** durch Emulsionspolymerisation mindestens eines $\alpha,\beta$-ungesättigten Nitril-Monomeren und mindestens eines konjugierten Dien-Monomeren, **dadurch gekennzeichnet,** dass die Emulsionspolymerisation in Gegenwart von tertiärem Nonylmercaptan bis zu einem Umsatz von mindestens 60 Gew.%, bezogen auf die Summe der eingesetzten Monomeren, durchgeführt wird.

**Weitere Gegenstände der vorliegenden Erfindung** sind ferner eine vulkanisierbare Mischung enthaltend den erfindungsgemäßen Nitrilkautschuk, ein Verfahren zur Herstellung dieser vulkanisierbaren Mischung, Vulkanisate auf Basis dieser vulkanisierbaren Mischung und ein Verfahren zur Herstellung solcher Vulkanisate.

**Nitrilkautschuk:**

Der erfindungsgemäße Nitrilkautschuk weist einen **Emissionsquotienten E** gemäß der Formel (I) von kleiner oder gleich 0,25 mg/(kg*Mooney Einheiten), bevorzugt kleiner oder gleich 0,22 mg/(kg*Mooney Einheiten) und besonders bevorzugt kleiner oder gleich 0,20 mg/(kg*Mooney Einheiten) auf,

$$E = \frac{[\text{flüchtige Bestandteile}]}{[\text{Mooney Viskosität}]} \times \frac{[\text{Nitrilgehalt}]}{100} \qquad (I)$$

worin

| | |
|---|---|
| [flüchtige Bestandteile] | die Konzentration der flüchtigen Bestandteile in mg/kg Nitrilkautschuk darstellt, die durch eine TDS-GC/MS Untersuchung nach VDA 278 Empfehlung (Version 09.2002) zwischen 28,4 min und 34,0 min bestimmt werden, |
| [Mooney-Viskosität] | die nach ASTM D 1646 bestimmte Mooney-Viskosität ML 1+4 bei 100°C des Nitrilkautschuks angegeben in Mooney-Einheiten darstellt, und |
| [Nitrilgehalt] | den Gehalt des α,β-ungesättigten Nitrils im Nitrilkautschuk in Gew.%, bestimmt gemäß DIN 53 625 nach Kjeldahl, darstellt. |

Bei den flüchtigen Bestandteilen, deren Konzentration durch die TDS-GC/MS Untersuchung nach VDA 278 Empfehlung (Version 09.2002) zwischen 28,4 min und 34,0 min bestimmt werden, handelt es sich typischerweise um flüchtige Bestandteile des eingesetzten Molekulargewichtsreglers.

Die Bestimmung der Mooney Viskosität des Nitrilkautschuks (ML 1+4 bei 100°C) gemäß nach ASTM D 1646 erfolgt typischerweise unter Einsatz von nicht kalandrierten erfindungsgemäßen Nitrilkautschuken.

Nitrilkautschuke, deren Polymerisation nicht unter Einsatz des speziellen Molekulargewichtsreglers und nicht bis zu Umsätzen von mindestens 60% bezogen auf die Summe der eingesetzten Monomeren geführt wurde, zeigen ein deutlich schlechteres Emissionsverhalten. Vulkanisate, die unter Einsatz der erfindungsgemäßen Nitrilkautschuke hergestellt werden, zeigen bei den relevanten Anwendungen, wie z.B. in Bodenbelägen, keinerlei Geruchsbelästigungen mehr. Die erfindungsgemäßen Nitrilkautschuke zeichnen sich gleichzeitig durch ein exzellentes Vulkanisationsverhalten aus.

Die erfindungsgemäßen Nitrilkautschuke weisen Wiederholungseinheiten mindestens eines α,β-ungesättigten Nitril-Monomeren und mindestens eines konjugierten Dien-Monomeren auf. Die erfindungsgemäßen Nitrilkautschuke können darüber hinaus noch Wiederholungseinheiten von einem oder mehreren weiteren copolymerisierbaren Monomeren aufweisen.

Die Wiederholungseinheiten des mindestens einen **konjugierte Diens** gehen bevorzugt auf ($C_4$-$C_6$) konjugierte Diene oder Mischungen davon zurück. Besonders bevorzugt sind 1,2-Butadien, 1,3-Butadien, Isopren, 2,3-Dimethylbutadien, Piperylen und Gemische daraus. Insbesondere bevorzugt sind 1,3-Butadien, Isopren und Gemische daraus. Ganz besonders bevorzugt ist 1,3-Butadien.

Als **α,β-ungesättigtes Nitril** kann jedes bekannte α,β-ungesättigte Nitril zur Herstellung der erfindungsgemäßen Nitrilkautschuke eingesetzt werden, bevorzugt sind ($C_3$-$C_5$)-α,β-ungesättigte Nitrile wie Acrylnitril, Methacrylnitril, Ethacrylnitril oder Mischungen davon. Besonders bevorzugt ist Acrylnitril.

Soweit ein oder mehrere weitere copolymerisierbare Monomere eingesetzt werden, können dies beispielsweise **aromatische Vinylmonomere**, bevorzugt Styrol, α-Methylstyrol und Vinylpyridin, **fluorhaltige Vinylmonomere**, bevorzugt Fluorethylvinylether, Fluorpropylvinylether, o-Fluormethylstyrol, Vinylpentafluorbenzoat, Difluoroethylen und Tetrafluoroethylen, oder auch **copolymerisierbare Antiageing Monomere**, bevorzugt N-(4-anilinophenyl) acrylamid, N-(4-anilinophenyl) methacrylamid, N-(4-anilinphenyl) cinnamide, N-(4-anilinophenyl) crotonamid, N-phenyl-4-(3-vinylbenzyloxy) anilin und N-phenyl-4-(4-vinylbenzyloxy) anilin sein sowie **nichtkonjugierte Diene**, wie 4-Cyanocyclohexen und 4-Vinylcyclohexen, oder auch **Alkine**, wie 1-oder 2-Butin.

Weiterhin können als copolymerisierbare Termonomere Hydroxylgruppen-haltige Monomere eingesetzt werden, vorzugsweise Hydroxyalkyl(meth)acrylate. Es können aber auch entsprechend substituierte (Meth)acrylamine eingesetzt werden.

Beispiele geeigneter Hydroxyalkylacrylatmonomere sind 2-Hydroxyethyl(meth)acrylat, 2-Hydroxypropyl(meth)acrylat, 3-Hydroxypropyl(meth)acrylat, 3-Chlor-2-hydroxypropyl(meth)-acrylat, 3-Phenoxy-2-hydroxypropyl(meth)acrylat, Glycerinmono(meth)acrylat, Hydroxybutyl-(meth)acrylat, 3-Chlor-2-hydroxypropyl(meth)acrylat, Hydroxyhexyl(meth)acrylat, Hydroxyoctyl-(meth)acrylat, Hydroxymethyl(meth)acrylamid, 2-Hydroxypropyl(meth)acrylat, 3-Hydroxypropyl-(meth)acrylamid, Di-(Ethylenglykol)itaconat, Di-(Propylenglykol)itaconat, Bis(2-Hydroxypropyl)-itaconat, Bis(2-Hydroxyethyl)itaconat, Bis(2-Hydroxyethyl)fumarat, Bis(2-Hydroxyethyl)maleat und Hydroxymethylvinylketon.

Weiterhin können als copolymerisierbare Termonomere Epoxygruppen-haltige Monomere eingesetzt werden, vorzugsweise Glycidyl(meth)acrylate.

Beispiele Epoxygruppen-haltiger Monomere sind Diglycidylitaconat, Glycidyl-p-styrencaboxylat, 2-Ethylglycidylacrylat, 2-Ethylglycidylmethacrylat, 2-(n-Propyl)glycidylacrylat, 2-(n-Propyl) glycidylmethacrylat, 2-(n-Butyl)glycidylacrylat, 2-(n-Butyl)glycidylmethacrylat, Glycidylmethylacrylat, Glycidylmethylmethacrylat, Glycidylacrylat, (3',4'-Epoxyheptyl)-2-ethylacrylat, (3',4'-Epoxyheptyl)-2-ethyl-methacrylat, (6',7'-Epoxyheptyl)acrylat, (6',7'-Epoxyheptyl)methacrylat, Allylglycidylether, Allyl-3,4-epoxyheptylether, 6,7-Epoxyheptylallylether, Vinylglycidylether, Vinyl-3,4-epoxyheptylether, 3,4-Epoxyheptylvinylether, 6,7-Epoxyheptylvinylether, o-Vinylbenzyl glycidylether, m-Vinylbenzylglycidylether, p-Vinylbenzylglycidylether, 3-Vinylcyclohexenoxid.

Alternativ können als weitere copolymerisierbare Monomere carboxygruppenhaltige, copolymerisierbare Termonomere eingesetzt werden, beispielsweise α,β-ungesättigte Monocarbonsäuren, deren Ester, α,β-ungesättigte Dicarbonsäuren, deren Mono- oder -Diester oder deren entsprechenden Anhydride oder Amide.

Als **α,β-ungesättigte Monocarbonsäuren** können bevorzugt Acrylsäure und Methacrylsäure eingesetzt werden.

Einsetzbar sind auch **Ester der α,β-ungesättigten Monocarbonsäuren**, bevorzugt deren Alkylester und Alkoxyalkylester. Bevorzugt sind die Alkylester, insbesondere $C_1$-$C_{18}$ Alkylester der α,β-ungesättigten Monocarbonsäuren, Besonders bevorzugt sind Alkylester, insbesondere $C_1$-$C_{18}$ Alkylester der Acrylsäure oder der Methacrylsäure, insbesondere Methylacrylat, Ethylacrylat, Propylacrylat, n-Butylacrylat, tert.-Butylacrylat, 2-Ethylhexylacrylat, n-Dodecylacrylat, Methylmethacrylat, Ethylmethacrylate, Butylmethacrylat und 2-Ethylhexyl-methacrylat. Bevorzugt sind auch Alkoxyalkylester der α,β-ungesättigten Monocarbonsäuren, besonders bevorzugt Alkoxyalkylester der Acrylsäure oder der Methacrylsäure, insbesondere $C_2$-$C_{12}$-Alkoxyalkylester der Acrylsäure oder der Methacrylsäure, ganz besonders bevorzugt Methoxymethylacrylat, Methoxyethyl(meth)acrylat, Ethoxyethyl(meth)acrylat und Methoxyethyl-(meth)acrylat. Einsetzbar sind auch Mischungen von Alkylestern, wie z.B. den vorgenannten, mit Alkoxyalkylestern, z.B. in Form der vorgenannten. Einsetzbar sind auch Cyanoalkylacrylat and Cyanoalkylmethacrylate, in denen die C-Atom-Zahl der Cyanoalkylgruppe 2-12 beträgt, vorzugsweise α-Cyanoethylacrylat, β-Cyanoethylacrylat und Cyanobutylmethacrylat. Einsetzbar sind auch Hydroxyalkylacrylate and Hydroxyalkylmethacrylat, in denen die C-Atom-Zahl der Hydroxyalkylgruppen 1-12 beträgt, vorzugsweise 2-Hydroxyethylacrylat, 2-Hydroxyethylmethacrylat und 3-Hydroxypropylacrylat; Einseztbar sind auch Fluor-substituierte Benzylgruppenhaltige Acrylate oder Methacrylate, vorzugtsweise Fluorobenzylacrylat, und Fluorobenzylmethacrylat. Einsetzbar sind auch Fluoroalkylgruppen haltige Acrylate und Methacrylate, vorzugsweise Trifluoroethylacrylat und Tetrafluoropropylmethacrylat. Einsetzbar sind auch Aminogruppenhaltige α,β-ungesättigte Carbonsäureester wie Dimethylaminomethylacrylat und Diethylaminoethylacrylat.

Als weitere copolymerisierbare Monomere können ferner **α,β-ungesättigte Dicarbonsäuren**, bevorzugt Maleinsäure, Fumarsäure, Crotonsäure, Itaconsäure, Citraconsäure und Mesaconsäure, eingesetzt werden.

Eingesetzt werden können ferner **α,β-ungesättigte Dicarbonsäureanhydride**, bevorzugt Maleinsäureanhydrid, Itaconsäureanhydrid, Citraconsäureanhydrid und Mesaconsäureanhydrid.

Eingesetzt werden können ferner **Mono- oder Diester von α,β-ungesättigten Dicarbonsäuren**.

Bei diesen α,β-ungesättigten Dicarbonsäuremono- oder diestern kann es sich beispielsweise handeln um **Alkyl**-, bevorzugt $C_1$-$C_{10}$-Alkyl, insbesondere Ethyl-, n-Propyl-, iso-Propyl, n-Butyl-, tert.-Butyl, n-Pentyl- oder n-Hexyl-, **Alkoxyalkyl-**, bevorzugt $C_2$-$C_{12}$ Alkoxyalkyl-, besonders bevorzugt $C_3$-$C_8$- Alkoxyalkyl, **Hydroxyalkyl**, bevorzugt $C_1$-$C_{12}$ Hydroxyalkyl-, besonders bevorzugt $C_2$-$C_8$- Hydroxyalkyl, **Cycloalkyl-**, bevorzugt $C_5$-$C_{12}$-Cycloalkyl-, besonders bevorzugt $C_6$-$C_{12}$-Cycloalkyl, **Alkylcycloalkyl-**, bevorzugt $C_6$-$C_{12}$-Alkylcycloalkyl-, besonders bevorzugt $C_7$-$C_{10}$-Alkylcycloalkyl, **Aryl-**, bevorzugt $C_6$-$C_{14}$-Aryl-Mono- oder -Diester, wobei es sich im Fall der Diester jeweils auch um gemischte Ester handeln kann.

Besonders bevorzugte **Alkylester von α,β-ungesättigten Monocarbonsäuren** sind Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethlyhexyl(meth)acrylat, Octyl(meth)acrylat, 2-Propylheptylacrylat und Lauryl(meth)acrylat. Insbesondere wird n-Butylacrylat eingesetzt.

Besonders bevorzugte **Alkoxyalkylester der α,β-ungesättigten Monocarbonsäuren** sind Methoxyethyl(meth)acrylat, Ethoxyethyl(meth)acrylat und Methoxyethyl(meth)acrylat. Insbesondere wird Methoxyethylacrylat eingesetzt.

Als sonstige Ester der α,β-ungesättigten Monocarbonsäuren werden ferner beispielsweise Polyethylenglykol(meth)acrylat, Polypropylenglykol(meth)acrylat, N-(2-Hydroxyethyl)acrylamide, N-(2-Hydroxymethyl)acrylamide und Urethan(meth)acrylat eingesetzt.

Beispiele von **α,β-ungesättigten Dicarbonsäuremonoestern** umfassen

- Maleinsäuremonoalkylester, bevorzugt Monomethylmaleat, Monoethylmaleat, Monopropyl maleat und Mono-n-butylmaleat;
- Maleinsäuremonocycloalkylester, bevorzugt Monocyclopentylmaleat, Monocyclohexyl maleat und Monocycloheptylmaleat;
- Maleinsäuremonoalkylcycloalkylester, bevorzugt Monomethylcyclopentylmaleat und Monoethylcyclohexylmaleat;
- Maleinsäuremonoarylester, bevorzugt Monophenylmaleat;
- Maleinsäuremonobenzylester, bevorzugt Monobenzylmaleat;
- Fumarsäuremonoalkylester, bevorzugt Monomethylfumarat, Monoethylfumarat, Monopropyl fumarat und Mono-n-butyl fumarat;
- Fumarsäuremonocycloalkylester, bevorzugt Monocyclopentylfumarat, Monocyclohexyl fumarat und Monocycloheptylfumarat;
- Fumarsäuremonoalkylcycloalkylester, bevorzugt Monomethylcyclopentylfumarat und Monoethylcyclohexylfumarat;
- Fumarsäuremonoarylester, bevorzugt Monophenylfumarat;

- Fumarsäuremonobenzylester, bevorzugt Monobenzylfumarat;
- Citraconsäuremonoalkylester, bevorzugt Monomethylcitraconat, Monoethylcitraconat, Monopropylcitraconat und Mono-n-butyl citraconat;
- Citraconsäuremonocycloalkylester, bevorzugt Monocyclopentylcitraconat, Monocyclohexyl citraconat und Monocycloheptylcitraconat;
- Citraconsäuremonoalkylcycloalkylester, bevorzugt Monomethylcyclopentylcitraconat und Monoethylcyclohexylcitraconat;
- Citraconsäuremonoarylester, bevorzugt Monophenylcitraconat;
- Citraconsäuremonobenzylester, bevorzgut Monobenzylcitraconat;
- Itaconsäuremonoalkylester, bevorzugt Monomethylitaconat, Monoethylitaconat, Monopropyl itaconat und Mono-n-butyl itaconat;
- Itaconsäuremonocycloalkylester, bevorzugt Monocyclopentylitaconat, Monocyclohexyl itaconat und Monocycloheptylitaconat;
- Itaconsäuremonoalkylcycloalkylester, bevorzugt Monomethylcyclopentylitaconat und Monoethylcyclohexylitaconat;
- Itaconsäuremonoarylester, bevorzugt Monophenylitaconat;
- Itaconsäuremonobenzylester, bevorzugt Monobenzylitaconat.
- Mesaconsäuremonoalkylester, bevorzugt Mesaconsäuremonoethylester;

Als **α,β-ungesättigte Dicarbonsäurediester** können die analogen Diester basierend auf den zuvor genannten Monoestergruppen eingesetzt werden, wobei es sich bei den Estergruppen auch um chemisch verschiedene handeln kann.

Als **weitere copolymerisierbare Monomere** kommen ferner radikalisch polymerisierbare Verbindungen mit in Betracht, die pro Molekül mindestens zwei olefinische Doppelbindungen enthalten. Beispiele mehrfach ungesättigter Verbindungen sind Acrylate, Methacrylate oder Itaconate von Polyolen wie z.B. Ethylenglykoldiacrylat, Diethylenglykoldimethacrylat, Triethylenglylkoldiacrylat, Butandiol-1,4-diacrylat, Propandiol-1,2-diacrylat, Butandiol-1,3-dimethacrylat, Neopentylglykoldiacrylat, Trimethylolpropandi(meth)acrylat, Trimethylolethan-di(meth)acrylat, Glycerindi- und -triacrylat, Pentaerythritdi-, -tri- und tetraacrylat oder - methacrylat, Dipentaerythrittetra, -penta- und hexaacrylat oder -methacrylat oder -itaconat, Sorbittetraacrylat, Sorbithexamethacrylat, Diacrylate oder Dimethacrylate von 1,4-Cyclohexandiol, 1,4-Dimethylolcyclohexan, 2,2-Bis(4-hydroxyphenyl)propan, von Polyethylenglykolen oder von Oligoestern oder Oligourethanen mit endständigen Hydroxylgruppen. Als mehrfach ungesättigte Monomere können auch Acrylamide verwendet werden wie z.B. Methylen-bisacrylamid, Hexamethylen-1,6-bisacrylamid, Diethylentriamin-tris-methacrylamid, Bis(methacrylamido-propoxy)ethan oder 2-Acrylamido-ethylacrylat. Beispiele für mehrfach ungesättigte Vinyl- und Allylverbindungen sind Divinylbenzol, Ethylenglykoldivinylether, Diallylphthalat, Allylmethacrylat, Diallylmaleat, Triallylisocyanurat oder Triallylphosphat.

Die Anteile an konjugiertem Dien und α,β-ungesättigtem Nitril in den erfindungsgemäßen Nitrilkautschuken können in weiten Bereichen variieren. Der Anteil des oder der Summe der konjugierten Diene liegt üblicherweise im Bereich von 20 bis 95 Gew.%, bevorzugt im Bereich von 45 bis 90 Gew.-%, besonders bevorzugt im Bereich von 50 bis 85 Gew. %, bezogen auf das Gesamtpolymer. Der Anteil des oder der Summe der α,β-ungesättigten Nitrile liegt üblicherweise bei 5 bis 80 Gew.%, bevorzugt bei 10 bis 55 Gew.-%, besonders bevorzugt bei 15 bis 50 Gew.-%, bezogen auf das Gesamtpolymer. Die Anteile der Wiederholungseinheiten an konjugiertem Dien und α,β-ungesättigtem Nitril in den erfindungsgemäßen Nitrilkautschuken summieren sich jeweils zu 100 Gew.-% auf.

Die zusätzlichen Monomere können in Mengen von 0 bis 40 Gew.%, bevorzugt 0 bis 30 Gew.-%, besonders bevorzugt 0 bis 26 Gew.-%, bezogen auf das Gesamtpolymer, vorliegen. In diesem Fall werden entsprechende Anteile der Wiederholungseinheiten des oder der konjugierten Diene und/oder der Wiederholungseinheiten des oder der α,β-ungesättigten Nitrile durch die Anteile dieser zusätzlichen Monomere ersetzt, wobei sich die Anteile aller Wiederholungseinheiten der Monomere weiterhin jeweils zu 100 Gew.-% aufsummieren müssen.

Werden als zusätzliche Monomere Ester der (Meth)acrylsäure eingesetzt, so erfolgt dies üblicherweise in Mengen von 1 bis 25 Gew. %. Werden als zusätzliche Monomere α,β-ungesättigte Mono- oder Dicarbonsäuren eingesetzt, so erfolgt dies üblicherweise in Mengen von weniger als 10 Gew. %.

Der Stickstoffgehalt wird in den erfindungsgemäßen Nitrilkautschuken gemäß DIN 53 625 nach Kjeldahl bestimmt. Aufgrund des Gehalts an polaren Comonomeren sind die Nitrilkautschuke üblicherweise in Methylethylketon bei 20°C ≥ 85 Gew. % löslich.

Die Nitrilkautschuke weisen Mooney-Viskositäten ML 1+4 bei 100°C von 10 bis 150 Mooney Einheiten (MU), vorzugsweise von 20 bis 100 MU auf.

Die Glastemperaturen der Nitrilkautschuke liegen im Bereich -70°C bis +10°C, vorzugsweise im Bereich -60°C bis 0°C.

Bevorzugt sind erfindungsgemäße Nitrilkautschuke, die Wiederholungseinheiten von Acrylnitril, und 1,3-Butadien aufweisen. Bevorzugt sind ferner Nitrilkautschuke, die Wiederholungseinheiten von Acrylnitril, 1,3-Butadien und

einem oder mehreren weiteren copolymerisierbaren Monomeren aufweisen. Ebenso bevorzugt sind Nitrilkautschuke, die Wiederholungseinheiten von Acrylnitril, 1,3-Butadien und einer oder mehreren a,β-ungesättigten Mono- oder Dicarbonsäure, deren Estern oder Amiden aufweisen, und insbesondere Wiederholungseinheiten eines Alkylesters einer α,β-ungesättigten Carbonsäuren, ganz besonders bevorzugt von Methyl(meth)acrylat, Ethyl(meth)acrylat, Propyl(meth)acrylat, n-Butyl(meth)acrylat, t-Butyl(meth)acrylat, Hexyl(meth)acrylat, 2-Ethylhexyl(meth)acrylat, Octyl(meth)acrylat oder Lauryl(meth)acrylat.

**Verfahren zur Herstellung der Nitrilkautschuke:**

Die Herstellung der Nitrilkautschuke erfolgt im erfindungsgemäßen Verfahren durch Emulsionspolymerisation.

**Molekulargewichtsregler:**

Es ist wesentlich, dass das Verfahren zur Herstellung der erfindungsgemäßen Nitrilkautschuke in Gegenwart von tert.-Nonylmercaptan als Molekulargewichtsregler durchgeführt wird. Hierbei kann es sich beispielsweise

a) um tert.-Nonylmercaptan mit einer Reinheit von mindestens 95 Gew.%, bevorzugt mindestens 97 Gew.% handeln, oder

b) um ein Gemisch, das mindestens 50 Gew.% aber weniger als 95 Gew.% tert.-Nonylmercaptan enthält sowie ein oder mehrere weitere isomere Nonylmercaptane und/oder ein oder mehrere weitere $C_{10}$-$C_{16}$ Alkylthiole enthält.

Das tert.-Nonylmercaptan a) ist käuflich erhältlich, z.B. von Sigma Aldrich (CAS Nr. 25360-10-5) mit einer Reinheit von mindestens 97 Gew.% oder von Chevron Phillips als Produkt Sulfol® 90 mit einer Reinheit von mindestens 97 Gew.% oder von diversen Chemikalienherstellern.

Gemische b), die mindestens 50 Gew.% aber weniger als 95 Gew.% tert.-Nonylmercaptan enthalten sowie ein oder mehrere weitere isomere Nonylmercaptane und/oder ein oder mehrere weitere $C_{12}$-$C_{16}$ Alkylthiole, sind ebenfalls käuflich erhältlich, z.B. als Mercaptane 175 von Atofina mit einem Gehalt an tert.-Nonylmercaptan von 65 Gew.% und Dodecylmercaptanen von 35 Gew.% oder Sulfol® 100 von Chevron Phillips.

Der eingesetze Molekulargewichtsregler wird bei der Polymerisation üblicherweise in einer Menge von 0,05 bis 3 Gew.-Teilen, vorzugsweise von 0,1 bis 1,5 Gew.-Teilen bezogen auf 100 Gew.-Teile der Monomermischung verwendet. Geeignete Mengen kann der Fachmann in einfachen Handsversuchen ermitteln.

Die Dosierung des Molekulargewichtsreglers bzw. des Molekulargewichtsreglergemischs erfolgt entweder ausschließlich zu Beginn der Polymerisation oder zu Beginn und zusätzlich portionsweise im Verlauf der Polymerisation. Bei Batch-Verfahren wird die gesamte Menge des Molekulargewichtsreglers bzw. des Molekulargewichtsreglergemischs typischerweise am Anfang zugegeben, bei kontinuierlicher Durchführung hat sich eine inkrementelle Zugabe bewährt. Üblicherweise wird der Molekulargewichtsregler bzw. das Reglergemisch dann in mindestens zwei Stufen zugegeben, wobei die Zugabe in zwei, drei oder auch mehr Stufen möglich ist. Selbst eine kontinuierliche Zugabe über die gesamte Polymerisationszeit ist möglich. Besonders bevorzugt wird der Molekulargewichtsregler bzw. das Molekulargewichtsreglergemisch in zwei Stufen zugegeben. Bei einer Zweistufendosierung hat es sich bewährt, den Regler/das Reglergemisch zunächst in einer Menge von 5 bis 65 Gew%, bevorzugt 10 bis 60 Gew.%, bezogen auf die Gesamtmenge an Regler/Reglergemisch, vor Beginn der Polymerisation zuzugeben und die restliche Menge an Regler/Reglergemisch in einer nachfolgenden Dosierung bei einem Umsatz von 5 bis 80%, bevorzugt 10 bis 55%, bezogen auf die insgesamt eingesetzte Menge an Monomeren. Bei einer Dreifach- und Mehrfach-Dosierung empfiehlt es sich, durch geeignete Vorversuche die günstigste Menge an Molekulargewichtsregler und den günstigsten Zeitpunkt der Zugabe duzu ermitteln.

Der Molekulargewichtsregler findet sich aufgrund seiner Funktion in einem gewissen Maß in Form von Endgruppen im Nitrilkautschuk wieder, d.h. der Nitrilkautschuk hat in einem gewissen Maß die entsprechenden Alkylthio-Endgruppen.

**Emulgatoren:**

Als **Emulgatoren** können wasserlösliche Salze anionischer Emulgatoren oder auch neutrale Emulgatoren eingesetzt werden. Bevorzugt werden anionische Emulgatoren eingesetzt.

Als anionische Emulgatoren können modifizierte Harzsäuren eingesetzt werden, die durch Dimerisierung, Disproportionierung, Hydrierung und Modifikation von Harzsäuregemischen erhalten werden, die Abietinsäure, Neoabietinsäure, Palustrinsäure, Lävopimarsäure enthalten. Eine besonders bevorzugte modifizierte Harzsäure ist die disproportionierte Harzsäure (Ullmann's Encyclopedia ofIndustrial Chemistry, 6. Auflage, Band 31, S. 345-355).

Als anionische Emulgatoren können auch Fettsäuren eingesetzt werden. Diese enthalten 6 bis 22 C-Atome pro Molekül. Sie können voll gesättigt sein oder auch eine oder mehrere Doppelbindungen im Molekül enthalten. Beispiele

für Fettsäuren sind Capronsäure, Laurinsäure, Myristinsäure, Palmitinsäure, Stearinsäure, Ölsäure, Linolsäure, Linolensäure. Die Carbonsäuren basieren üblicherweise auf herkunftsspezifischen Ölen oder Fetten wie z. B. Castoroil, Baumwollsaat, Erdnussöl, Leinsamenöl, Kokosnussfett, Palmkernöl, Olivenöl, Rapsöl, Sojabohnenöl, Fischöl und Rindertalg etc. (Ullmann's Encyclopedia of Industrial Chemistry, 6. Auflage, Band 13, S. 75-108). Bevorzugte Carbonsäuren leiten sich von der Kokosfettsäure und von Rindertalg ab und sind teil- bzw. vollhydriert.

Derartige Carbonsäuren auf Basis modifizierter Harzsäuren bzw. Fettsäuren werden als wasserlösliche Lithium-Natrium, Kalium und Ammoniumsalze verwendet. Die Natrium- und Kaliumsalze sind bevorzugt.

Anionische Emulgatoren sind ferner Sulfonate, Sulfate und Phosphate, die an einen organischen Rest gebunden sind. Als organischer Rest kommen aliphatische, aromatische, alkylierte Aromaten, kondensierte Aromaten, sowie methlyenverbrückte Aromaten infrage, wobei die methlyenverbrückten und kondensierten Aromaten zusätzlich alkyliert sein können. Die Länge der Alkylketten beträgt 6 bis 25 C-Atome. Die Länge der an die Aromaten gebundenen Alkylketten liegt zwischen 3 und 12 C-Atomen.

Die Sulfate, Sulfonate und Phosphate werden als Lithium-, Natrium-, Kalium- und Ammoniumsalze eingesetzt. Die Natrium-, Kalium und Ammoniumsalze sind bevorzugt.

Beispiele für derartige Sulfonate, Sulfate und Phosphate sind Na-Laurylsulfat, Na-Alkylsulfonat, Na-Alkylarylsulfonat, Na-Salze methylenverbrückter Arylsulfonate, Na-Salze alkylierter Naphthalinsulfonate sowie die Na-Salze methlyenverbrückter Napthalinsulfonate, die auch oligomerisiert sein können, wobei der Oligimerisierungsgrad zwischen 2 bis 10 liegt. Üblicherweise liegen die alkylierten Naphthalinsulfonsäuren und die methylenverbrückten (und gegebenenfalls alkylierten) Naphthalinsulfonsäuren als Isomerengemische vor, die auch mehr als 1 Sulfonsäuregruppe (2 bis 3 Sulfonsäuregruppen) im Molekül enthalten können. Besonders bevorzugt sind Na-Laursylsulfat, Na-Alkylsuflonatgemische mit 12 bis 18 C-Atomen, Na-Alkylarylsulfonate, Na-Diisobutylennaphthalinsulfonat, methlyenverbückte Polynaphthalinsulfonatgemische sowie methylenverbrückte Arylsulfonatgemische.

Neutrale Emulgatoren leiten sich von Additionsprodukten des Ethylenoxids und des Propylenoxids an Verbindungen mit hinreichend acidem Wasserstoff ab. Hierzu gehören beispielsweise Phenol, alkyliertes Phenol und alkylierte Amine. Die mittleren Polymerisationsgrade der Epoxide liegen zwischen 2 bis 20. Beispiele für neutrale Emulgatoren sind ethoxylierte Nonylphenole mit 8, 10 und 12 Ethylenoxideinheiten. Die neutralen Emulgatoren werden üblicherweise nicht alleine, sondern in Kombination mit anionischen Emulgatoren eingesetzt.

Bevorzugt sind die Na- und K-Salze von disproportionierter Abietinsäure und von teilhydrierter Talgfettsäure, sowie Mischungen derselben, Natriumlaurylsulfat, Na-Alkylsulfonate, Natrium-Alkylbenzolsufonat sowie alkylierte und methylenverbrückte Naphthalinsulfonsäuren.

Die Emulgatoren werden in einer Menge von 0,2 bis 15 Gew.-Teile, bevorzugt 0,5 bis 12,5 Gew.-Teile, besonders bevorzugt 1,0 bis 10 Gew.-Teile bezogen auf 100 Gew.-Teile der Monomermischung eingesetzt.

Die Emulsionspolymerisation wird unter Verwendung der genannten Emulgatoren durchgeführt. Falls nach Abschluss der Polymerisation Latices erhalten werden, die aufgrund einer gewissen Instabilität zur vorzeitigen Selbskoagulation neigen, können die genannten Emulgatoren auch zur Nachstabilisierung der Latices verwendet werden. Dies kann insbesondere vor der Entfernung nicht umgesetzter Monomerer durch Behandlung mit Wasserdampf sowie vor einer Latexlagerung notwendig werden.

**<u>Polymerisationsinitiatoren:</u>**

Zur Initiierung der Emulsionspolymerisation werden typischerweise **Polymerisationsinitiatoren** eingesetzt, die in Radikale zerfallen. Hierzu gehören Verbindungen, die eine -O-O- Einheit (Peroxo-Verbindungen) oder eine -N≡N-Einheit (Azoverbindung) enthalten.

Zu den Peroxoverbindungen gehören Wasserstoffperoxid, Peroxodisulfate, Peroxodiphosphate, Hydroperoxide, Persäuren, Persäureester, Persäureanhydride und Peroxide mit zwei organischen Resten. Geeignete Salze der Peroxodischwefelsäure und der Peroxodiphosphorsäure sind die Natrium-, Kalium- und Ammoniumsalze. Geeignete Hydroperoxide sind z.B. t-Butylhydroperoxid, Cumolhydroperoxid und p-Menthanhydroperoxid. Geeignete Peroxide mit zwei organischen Resten sind Dibenzoylperoxid, 2,4,-Dichlorbenzoylperoxid, Di-t-Butylperoxid, Dicumylperoxid, t-Butylperbenzoat, t-Butylperacetat etc. Geeignete Azoverbindungen sind Azobisisobutyronitril, Azobisvaleronitril und Azobiscyclohexannitril.

Wasserstoffperoxid, Hydroperoxide, Persäuren, Persäureester, Peroxodisulfat und Peroxodiphosphat werden auch in Kombination mit Reduktionsmitteln eingesetzt. Geeignete Reduktionsmittel sind Sulfenate, Sulfinate, Sulfoxylate, Dithionit, Sulfit, Metabisulfit, Disulfit, Zucker, Harnstoff, Thioharnstoff, Xanthogenate, Thioxanthogenate, Hydraziniumsalzen, Amine und Aminderivate wie Anilin, Dimethylanilin, Monoethanolamin, Diethanolamin oder Triethanolamin. Initiatorsysteme, die aus einem Oxidations- und einem Reduktionsmittel bestehen, bezeichnet man als Redoxsysteme. Bei der Verwendung von Redoxsystemen verwendet man häufig zusätzlich Salze von Übergangsmetallverbindungen wie Eisen, Cobalt oder Nickel in Kombination mit geeigneten Komplexbildnern wie Natrium-Ethylendiamtetraacetat, Natrium-Nitrilotriacetat sowie Trinatriumphosphat oder Tetrakaliumdiphsophat.

Bevorzugte Redoxsysteme sind beispielsweise:

1) Kaliumperoxodisulfat in Kombination mit Triethanolamin,
2) Ammoniumperoxodiphosphat in Kombination mit Natrimmetabisulfit ($Na_2S_2O_5$),
3) p-Menthanhydroperoxid / Natriumformaldehydsulfoxylat in Kombination mit Fe-II-Sulfat ($FeSO_4$*$7H_2O$), Natrium-Ethylendiaminoacetat und Trinatriumphosphat;
4) Cumolhydroperoxid/Natriumformaldehydsulfoxylat in Kombination mit Fe-II-Sulfat ($FeSO_4$*$7H_2O$), Natrium-Ethylendiaminoacetat und Tetrakaliumdiphosphat,
5) Pinanhydroperoxid/Natriumformaldehydsulfoxylat in Kombination mit Fe-II-Sulfat ($FeSO_4$*$7H_2O$), Natrium-Ethylendiaminoacetat und Trinatriumphosphat.

Die Menge an Oxidationsmittel beträgt 0,001 bis 1 Gew.-Teile bezogen auf 100 Gew.-Teile Monomer. Die molare Menge an Reduktionsmittel liegt zwischen 50% bis 500% bezogen auf die molare Menge des eingesetzten Oxidationsmittels.

Die molare Menge an Komplexbildner bezieht sich auf die Menge an eingesetztem Übergangsmetall und ist mit diesem üblicherweise äquimolar.

Zur Durchführung der Polymerisation werden sämtliche oder einzelne Komponenten des Initiatorsystems zu Beginn der Polymerisation der Polymerisation oder während der Polymerisation zudosiert.

Die portionsweise Zugabe sämtlicher sowie einzelner Komponenten des Aktivatorsystems während der Polymerisation ist bevorzugt. Durch die sequentielle Zugabe lässt sich die Reaktionsgeschwindigkeit steuern.

Die Polymerisationszeit liegt im Bereich von 5 h bis 15 h und hängt im Wesentlichen vom Acrylnitrilgehalt der Monomermischung und von der Polymerisationstemperatur ab.

Die **Polymerisationstemperatur** liegt im Bereich von 0 bis 30°C, bevorzugt von 5 bis 25°C.

Es ist wesentlich für den Erhalt der erfindungsgemäßen Nitrilkautschuke, dass die Polymerisation bis zu einem **Umsatz von mindestens 60% bezogen auf die eingesetzte Monomermischung** durchgeführt wird. Bevorzugt wird die Polymerisation bis zu einem Umsatz im Bereich von 60 bis 98%, besonders bevorzugt 62 bis 95%, insbesondere 65 bis 95% durchgeführt. Bei Erreichen dieses Umsatzes wird die Polymerisation abgestoppt.

Hierfür wird dem Reaktionsgemisch ein **Stopper** zugesetzt. Hierfür geeignet sind beispielsweise Dimethyldithiocarbamat, Na-Nitrit, Mischungen von Dimethyldithiocarbamat und Na-Nitrit, Hydrazin und Hydroxylamin sowie hiervon abgeleitete Salze wie Hydraziniumsulfat und Hydroxylammoniumsulfat, Diethylhydroxylamin, Diisopropylhydroxylamin, wasserlösliche Salze des Hydrochinon, Natriumdithionit, Phenyl-$\alpha$-Naphthylamin und aromatische Phenole wie tert-Butylbrenzkatechol, oder Phenothiazin.

Die bei der Emulsionspolymerisation verwendete **Wassermenge** liegt im Bereich von 100 bis 900 Gew.-Teilen, bevorzugt im Bereich von 120 bis 500 Gew.-Teilen, besonders bevorzugt im Bereich von 150 bis 400 Gew.-Teilen Wasser bezogen auf 100 Gew.-Teile der Monomermischung.

Zur Reduktion der Viskosität während der Polymerisation, zur pH-Einstellung sowie als pH-Puffer können der wässrigen Phase bei der Emulsionspolymerisation Salze zugesetzt werden. Typische Salze sind Salze einwertiger Metalle in Form von Kalium- und Natriumhydroxid, Natriumsulfat, Natriumcarbonat, Natriumhydrogencarbonat, Natriumchlorid und Kaliumchlorid. Bevorzugt sind Natrium- und Kaliumhydroxid, Natriumhydrogencarbonat und Kaliumchlorid. Die Mengen dieser Elektrolyte liegen im Bereich 0 bis 1 Gew.-Teile, vorzugsweise 0 bis 0,5 Gew.-Teile bezogen auf 100 Gew.-Teile der Monomermischung.

Die Polymerisation kann entweder diskontinuierlich oder auch kontinuierlich in einer Rührkesselkaskade durchgeführt werden.

Zur Erzielung eines gleichmäßigen Polymerisationsverlaufs wird für den Start der Polymerisation nur ein Teil des Initiatorsystems verwendet und der Rest während der Polymerisation nachdosiert. Üblicherweise startet man die Polymerisation mit 10 bis 80 Gew. %, vorzugsweise 30-50 Gew. % der Gesamtmenge an Initiator. Auch die Nachdosierung einzelner Bestandteile des Initiatorsystems ist möglich.

Will man chemisch einheitliche Produkte herstellen, werden Acrylnitril bzw. Butadien nachdosiert, wenn die Zusammensetzung außerhalb des azeotropen Butadien/Acrylnitril-Verhältnisses liegen soll. Vorzugsweise ist eine Nachdosierung bei NBR-Typen mit Acrylnitrilgehalten von 10 bis 34 Gew.% sowie bei den Typen mit 40 bis 50 Gew.% Acrylnitril (W. Hofmann, "Nitrilkautschuk", Berliner Union, Stuttgart, 1965, Seite 58-66) der Fall. Die Nachdosierung erfolgt - wie z.B. in der DD 154 702 angegeben - vorzugsweise computergesteuert auf der Basis eines Rechnerprogramms.

Zur Entfernung nicht umgesetzter Monomere kann der abgestoppte Latex einer Wasserdampfdestillation unterzogen werden. Hierbei werden Temperaturen im Bereich von 70°C bis 150°C angewandt, wobei bei Temperaturen <100°C der Druck reduziert wird. Vor der Wasserdampfdestillation kann eine Nachstabilisierung des Latex mit Emulgator erfolgen. Hierfür verwendet man zweckmäßigerweise die zuvor genannten Emulgatoren in Mengen von 0,1 bis 2,5 Gew. %, vorzugsweise 0,5 bis 2,0 ,Gew. % bezogen auf 100 Gew.-Teile Nitrilkautschuk.

**Latex-Koagulation:**

Vor oder bei der Latexkoagulation können dem Latex ein oder mehrere Alterungsschutzmittel zugesetzt werden. Hiefür eigenen sich phenolische, aminische und auch sonstige Alterungsschutzmittel.

Geeignete phenolische Alterungsschutzmittel sind alkylierte Phenole, styrolisiertes Phenol, sterisch gehinderte Phenole wie 2,6-Di-tert.-Butylphenol, 2,6-Di-*tert*-Butyl-*p*-Kresol (BHT), 2,6-Di-tert.-Butyl-4-Ethylphenol, estergruppenhaltige sterisch gehinderte Phenole, thioetherhaltige sterisch gehinderte Phenole, 2,2'-Methylen-bis-(4-Methyl-6-*tert*-Butylphenol) (BPH) sowie sterisch gehinderte Thiobisphenole.

Falls eine Verfärbung des Kautschuks ohne Bedeutung ist, werden auch aminische Alterungsschutzmittel z. B. Mischungen aus Diaryl-p-phenylendiaminen (DTPD), octyliertes Diphenylamin (ODPA), Phenyl-$\alpha$-Naphthylamin (PAN), Phenyl-$\beta$-Naphthylamin (PBN), vorzugsweise solche auf Phenylendiaminbasis eingesetzt. Beispiele für Phenylendiamine sind *N*-Isopropyl-*N'*-phenyl-*p*-Phenylendiamin, *N*-1,3-Dimethylbutyl-*N'*-Phenyl-*p*-Phenylendiamin (6PPD), *N*-1,4-Dimethylpentyl-*N'*-phenyl-*p*-Phenylendiamin (7PPD), *N*,*N'*-bis-1,4-(1,4-Dimethylpentyl)-*p*-Phenylendiamin (77PD) etc.

Zu den sonstigen Alterungsschutzmitteln gehören Phosphite wie Tris-(nonylphenyl)phosphit, polymerisiertes 2,2,4-Trimethyl-1,2-dihydrochinolin (TMQ), 2-Mercaptobenzimidazol (MBI), Methyl-2-Mercaptobenzimidazol (MMBI), Zinkmethylmercaptobenzimidazol (ZMMBI). Die Phosphite werden oft in Kombination mit phenolischen Altrungsschutzmitteln eingesetzt. TMQ, MBI und MMBI werden v.a. für NBR-Typen verwendet, die peroxidisch vulkanisiert werden.

Für die Koagulation wird der Latex auf einen für den Fachmann bekannten pH-Wert und zwar durch Zusatz einer Base, bevorzugt Ammoniak oder Natrium- oder Kaliumhydroxid, oder einer Säure, bevorzugt Schwefelsäure oder Essigsäure, eingestellt.

In einer Ausführungsform des Verfahrens wird die Koagulation unter Einsatz mindestens eines Salzes ausgewählt aus der Gruppe bestehend aus Aluminium-, Calcium-, Magnesium-, Natrium-, Kalium- und Lithium-Salzen durchgeführt. Als Anionen dieser Salze werden üblicherweise ein-oder zweiwertige Anionen eingesetzt. Bevorzugt sind Halogenide, besonders bevorzugt Chlorid, Nitrat, Sulfat, Hydrogencarbonat, Carbonat, Formiat und Acetat.

Geeignet sind beispielsweise Natriumchlorid, Kaliumchlorid, Calciumchlorid, Magnesiumchlorid, Natriumnitrat, Kaliumnitrat, Natriumsulfat, Kaliumsulfat, Natriumhydrogencarbonat, Kaliumhydrogencarbonat, Natriumcarbonat, Kaliumcarbonat, Aluminiumsulfat, Kaliumaluminiumsulfat (Kalium-alaun), Natriumaluminiumsulfat (Natriumalaun), Natriumacetat, Calciumacetat und Calciumformiat. Sofern für die Latex Koagulation ein wasserlösliches CalciumSalz verwendet wird, ist Calciumchlorid bevorzugt.

Die Salze werden in einer Menge von 0,05 bis 10 Gew%, bevorzugt 0,5 bis 8 Gew%, besonders bevorzugt 1 bis 5 Gew%, bezogen auf den Feststoffgehalt der Latexdispersion zugegeben

Neben mindestens einem Salz aus der oben definierten Gruppe können bei der Koagulation auch Fällhilfsmittel eingesetzt werden. Als Fällhilfsmittel kommen beispielsweise wasserlöslichen Polymere in Frage. Diese sind nichtionisch, anionisch oder kationisch.

Beispiele für nichtionische polymere Fällhilfsmittel sind modifizierte Cellulose wie Hydroxyalkylcellulose oder Methylcellulose sowie Addukte von Ethylenoxid und Propylenoxid an Verbindungen mit acidem Wasserstoff. Beispiele für Verbindungen mit acidem Wasserstoff sind: Fettsäure, Zucker wie Sorbit, Mono- und Difettsäureglyceride, Phenol, alkylierte Phenole, (Alkyl)phenol/Formaldehyd-Kondensate etc. Die Additionsprodukte von Ethylenoxid und Propylenoxid an diese Verbindungen können statistisch und blockartig aufgebaut sein. Von diesen Produkten sind solche bevorzugt, bei denen die Löslichkeit mit zunehmender Temperatur abnimmt. Charakteristische Trübungstemperaturen liegen im Bereich 0 bis 100°C, insbesondere im Bereich von 20 bis 70°C.

Beispiele für anionische polymere Fällhilfsmittel sind die Homo- und Copolymeren von (Meth)acrylsäure, Maleinsäure, Maleinsäureanydrid etc. Bevorzugt ist das Na-Salz der Polyacrylsäure.

Kationische polymere Fällhilfsmittel basieren üblicherweise auf Polyaminen sowie auf Homo- und Copolymeren des (Meth)acrylamids. Bevorzugt sind Polymethacxrylamide und Polyamine, insbesondere auf Basis Epichlorhydrin und Dimethylamin. Die Mengen an polymeren Fällhilfsmitteln betragen 0,01 bis 5 Gew.-Teilen, bevorzugt 0,05 bis 2,5 Gew.-Teile auf 100 Gew.-Teile Nitrilkautschuk.

Auch der Einsatz anderer Fällhilfsmittel ist denkbar. Es ist aber ohne Probleme möglich, das erfindungsgemäße Verfahren in Abwesenheit von zusätzlichen durchzuführen.

Der zur Koagulation eingesetzte Latex besitzt zweckmäßigerweise eine Feststoffkonzentration im Bereich von 1 % bis 40 %, vorzugsweise im Bereich von 5 % bis 35 % und besonders bevorzugt im Bereich von 15 bis 30 Gew. %.

Die Latexkoagulation wird im Temperaturbereich von 10 bis 110°C durchgeführt, vorzugsweise von 20 bis 100°C, besonders bevorzugt 50 bis 98°C. Die Latexkoagulation kann kontinuierlich oder diskontinuierlich erfolgen, bevorzugt wird kontinuierlich gearbeitet.

In einer alternativen Ausführungsform kann der üblicherweise von nicht umgesetzten Monomeren abgetrennte Latex auch mit Säuren in einem pH-Bereich von $\leq 6$, bevorzugt $\leq 4$, besonders bevorzugt 2, behandelt werden, wodurch das Polymer ausfällt. Zur Fällung können alle mineralischen und organischen Säuren verwendet werden, die es gestatten

die gewählten pH-Bereiche einzustellen. Mineralische Säuren werden bevorzugt zur pH-Einstellung verwendet. Anschließend wird das Polymer in der dem Fachmann üblichen Weise von der Suspension abgetrennt. Auch dies kann kontinuierlich oder diskontinuierlich erfolgen, bevorzugt wird kontinuierlich gearbeitet.

**Wäsche und Trocknung des koagulierten Nitrilkautschuks:**

Nach der Koagulation liegt der Nitrilkautschuk üblicherweise in Form sogenannter Krümel vor. Die Wäsche des koagulierten NBR wird daher auch als Krümelwäsche bezeichnet. Für diese Wäsche kann entweder entionisiertes Wasser oder nicht entionisiertes Wasser eingesetzt werden. Die Wäsche wird bei einer Temperatur im Bereich von 15 bis 90°C durchgeführt, bevorzugt bei einer Temperatur im Bereich von 20 bis 80°C. Die Menge des Waschwassers beträgt 0,5 bis 20 Gew.-Teile, bevorzugt 1 bis 10 Gew.-Teile und besonders bevorzugt 1 bis 5 Gew.-Teile bezogen auf 100 Gew.-Teile Nitrilkautschuk. Bevorzugterweise werden die Kautschukkrümel einer mehrstufigen Wäsche unterworfen, wobei die Kautschukkrümel zwischen den einzelnen Waschstufen teilweise entwässert werden. Die Restfeuchten der Krümel zwischen den einzelnen Waschstufen liegen im Bereich von 5 bis 50 Gew.%, vorzugsweise im Bereich von 7 bis 25 Gew. %. Die Zahl der Waschstufen liegt üblicherweise bei 1 bis 7, vorzugsweise bei 1 bis 3. Die Wäsche wird diskontinuierlich oder kontinuierlich durchgeführt. Vorzugsweise verwendet man ein mehrstufiges, kontinuierliches Verfahren, wobei für den schonenden Umgang mit Wasser eine Gegenstromwäsche bevorzugt ist. Nach Abschluss der Wäsche hat es sich bewährt, die Nitrilkautschuk-Krümel zu entwässern. Die Trocknung des vorentwässerten Nitrilkautschuks erfolgt in einem Trockner, geeigent sind beispielsweise Fließbetttrockner oder Plattentrockner. Die Temperaturen bei der Trocknung liegen bei 80 bis 150°C. Bevorzugt ist eine Trocknung mit Temperaturprogramm, wobei gegen Ende des Trockenprozesses die Temperatur abgesenkt wird.

**Gegenstand der Erfindung sind** ferner vulkanisierbaren Mischungen enthaltend mindestens einen erfindungsgemäßen Nitrilkautschuk und mindestens einen Vernetzer. Bevorzugt enthalten diese vulkanisierbaren Mischungen zusätzlich noch mindestens einen Füllstoff. Darüberhinaus können den Mischungen ein oder mehrere weitere typische Kautschukadditive zugesetzt werden.

Die Herstellung dieser vulkanisierbaren Mischungen erfolgt durch Mischen mindestens eines erfindungsgemäßen Nitrilkautschuks und mindestens eines Vernetzers. Soweit ein oder mehreren Füllstoffe und/oder ein oder mehrere weitere Additive eingesetzt werden, werden auch diese zugemischt.

Als **Vernetzer** kommen beispielsweise peroxidische Vernetzer in Frage wie Bis(2,4-dichlorbenzyl)peroxid, Dibenzoylperoxid, Bis(4-chlorbenzoyl)peroxid, 1,1-Bis-(t-butylperoxy)-3,3,5-trimethylcylohexan, tert-Butylperbenzoat, 2,2 Bis(t-butylperoxy) buten, 4,4-di-tert.Butyl peroxynonylvalerat, Dicumylperoxid, 2,5-Dimethyl-2,5-di(t-butylperoxy)-hexan, tert-Butylcumylperoxid, 1,3-Bis(t-butylperoxy isopropyl)-benzol, Di-t-butylperoxid und 2,5-Dimethyl-2,5-di(t-butylperoxy)-hexyn-3.

Es kann vorteilhaft sein, neben diesen peroxidischen Vernetzern noch weitere Zusätze zu verwenden, mit deren Hilfe die Vernetzungsausbeute erhöht werden kann: Hierfür sind beispielsweise Triallylisocyanurat, Triallylcyanurat, Trimethylolpropantri(meth)acrylat, Triallyltrimellithat, Ethylenglycoldimethacrylat, Butandioldimethacrylat, Trimethylolpropantrimethacrylat, Zn-diacrylat, Zn-dimethacrylat, 1,2-Polybutadien oder N,N-'m-Phenylendimaleinimid geeignet.

Die Gesamtmenge des oder der Vernetzer liegt üblicherweise im Bereich von 1 bis 20 phr, bevorzugt im Bereich von 1,5 bis 15 phr und besonders bevorzugt im Bereich von 2 bis 10 phr, bezogen auf den Nitrilkautschuk.

Als Vernetzer können auch Schwefel in elementarer löslicher oder unlöslicher Form oder Schwefelspender eingesetzt werden.

Als Schwefelspender kommen beispielsweise Dimorpholyldisulfid (DTDM), 2-Morpholinodithiobenzothiazol (MBSS), Caprolactamdisulfid, Dipentamethylenthiuramtetrasulfid (DPTT), und Tetramethylthiuramdisulfid (TMTD) in Frage.

Auch bei der Schwefelvulkanisation der erfindungsgemäßen Nitrilkautschuke ist es möglich, noch weitere Zusätze zu verwenden, mit deren Hilfe die Vernetzungsausbeute erhöht werden kann. Grundsätzlich kann die Vernetzung aber auch mit Schwefel oder Schwefelspendern allein erfolgen. Umgekehrt kann die Vernetzung der erfindungsgemäßen Nitrilkautschuke aber auch nur in Gegenwart der oben genannten Zusätze erfolgen, d.h. ohne Zusatz von elementarem Schwefel oder Schwefelspendern.

Als Zusätze, mit deren Hilfe die Vernetzungsausbeute erhöht werden kann, eignen sich z.B. Dithiocarbamate, Thiurame, Thiazole, Sulfenamide, Xanthogenate, Guanidinderivate, Caprolactame und Thioharnstoffderivate.

Als Dithiocarbamate können beispielsweise eingesetzt werden: Ammoniumdimethyldithiocarbamat, Natriumdiethyldithiocarbamat (SDEC), Natriumdibutyl-dithiocarbamat (SDBC), Zinkdimethyldithiocarbamat (ZDMC), Zinkdiethyldithiocarbamat (ZDEC), Zinkdibutyldithiocarbamat (ZDBC), Zinkethylphenyldithiocarbamat (ZEPC), Zinkdibenzyldithiocarbamat (ZBEC), Zinkpentamethylendithiocarbamat (Z5MC), Tellurdiethyldithiocarbamat, Nickeldibutyldithiocarbamat, Nickeldimethyldithiocarbamat und Zinkdiisononyldithiocarbamat. Als Thiurame können z.B. Tetramethylthiuramdisulfid (TMTD), Tetramethylthiurammonosulfid (TMTM), Dimethyldiphenylthiuramdisulfid, Tetrabenzylthiuramdisulfid,

Dipentamethylenthiuramtetrasulfid oder Tetraethylthiuramdisulfid (TETD) eingesetzt werden.

Als Thiazole können z.B. 2-Mercaptobenzothiazol (MBT), Dibenzthiazyldisulfid (MBTS), Zinkmercaptobenzothiazol (ZMBT) oder Kupfer-2-mercaptobenzothiazol eingesetzt werden.

Als Sulfenamidderivate können z.B. N-Cyclohexyl-2-benzothiazylsulfenamid (CBS), N-tert.-Butyl-2-benzthiazylsulfenamid (TBBS), N,N'-Dicyclohexyl-2-benzthiazylsulfenamid (DCBS), 2-Morpholinothiobenzthiazol (MBS), N-Oxydiethylenthiocarbamyl-N-tert.butylsulfenamid oder Oxydiethylenthiocarbamyl-N-oxyethylensulfenamid eingesetzt werden.

Als Xanthogenate können z.B. Natriumdibutylxanthogenat, Zinkisopropyldibutylxanthogenat oder Zinkdibutylxanthogenat eingesetzt werden.

Als Guanidinderivate können z.B. Diphenylguanidin (DPG), Di-o-tolylguanidin (DOTG) oder o-Tolylbiguanid (OTBG) eingesetzt werden.

Als Dithiophosphate können z.B. Zinkdialkydithiophosphate (Kettenlänge der Alkylreste $C_2$ bis $C_{16}$), Kupferdialkyldithiophosphate (Kettenlänge der Alkylreste $C_2$ bis $C_{16}$) oder Dithiophoshorylpolysulfid eingesetzt werden.

Als Caprolactam kann beispielsweise Dithio-bis-caprolactam eingesetzt werden.

Als Thioharnstoffderivate können beispielsweise N,N'-Diphenylthioharnstoff (DPTU), Diethylthioharnstoff (DETU) und Ethylenthioharnstoff (ETU) eingesetzt werden.

Ebenso als Zusätze geeignet sind beispielsweise Zinkdiamindiisocyanat, Hexamethylentetramin, 1,3-Bis(citraconimidomethyl)benzol sowie zyklische Disulfane.

Die genannten Zusätze und Vernetzungsmittel können sowohl einzeln als auch in Mischungen eingesetzt werden. Bevorzugt werden folgende Substanzen für die Vernetzung der Nitrilkautschuke eingesetzt: Schwefel, 2-Mercaptobenzthiazol, Tetramethylthiuramdisulfid, Tetramethylthiurammonosulfid, Zinkdibenzyldithiocarbamat, Dipentamethylenthiuramtetrasulfid, Zinkdialkyldithiophosphat, Dimorpholyldisulfid, Tellurdiethyldithiocarbamat, Nickeldibutyldithiocarbamat, Zinkdibutyldithiocarbamat, Zinkdimethyldithiocarbamat und Dithio-bis-caprolactam.

Die Vernetzungsmittel und zuvor genannten Zusätze können jeweils in Mengen von ca. 0,05 bis 10 phr, vorzugsweise 0,1 bis 8 phr, insbesondere 0,5 bis 5 phr (Einzeldosierung, jeweils bezogen auf die Wirksubstanz) eingesetzt werden.

Bei der erfindungsgemäßen Schwefelvernetzung ist es gegebenenfalls auch sinnvoll, zusätzlich zu den Vernetzungsmitteln und oben genannten Zusätzen auch weitere anorganische bzw. organische Substanzen mit zu verwenden, wie Zinkoxid, Zinkcarbonat, Bleioxid, Magnesiumoxid, gesättigte oder ungesättigte organische Fettsäuren und deren Zinksalze, Polyalkohole, Aminoalkohole, wie zum Beispiel Triethanolamin sowie Amine wie zum Beispiel Dibutylamin, Dicyclohexylamin, Cyclohexylethylamin und Polyetheramine.

Daneben können auch Anvulkanisationsverzögerer eingesetzt werden. Hierzu gehören Cyclohexylthiophthalimid (CTP), N,N' Dinitrosopentamethlyentetramin (DNPT), Phthalsäureanhydrid (PTA) und Diphenylnitrosamin. Bevorzugt ist Cyclohexylthiophthalimid (CTP).

Neben der Zugabe des oder der Vernetzer kann der erfindungsgemäße Nitrilkautschuk auch mit weiteren üblichen Kautschukadditiven gemischt werden.

Diese umfassen z.B. die typischen und dem Fachmann bekannten Substanzen wie Füllstoffe, Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel.

Als **Füllstoffe** können beispielsweise Ruß, Kieselsäure, Bariumsulfat, Titandioxid, Zinkoxid, Calciumoxid, Calciumcarbonat, Magnesiumoxid, Aluminiumoxid, Eisenoxid, Aluminiumhydroxid, Magnesiumhydroxid, Aluminiumsilikate, Diatomeenerde, Talkum, Kaoline, Bentonite, Kohlenstoff Nanotubes ,Teflon (letzteres bevorzugt in Pulverform), oder Silikate eingesetzt werden.

Als **Füllstoffaktivatoren** kommen insbesondere organische Silane, wie beispielsweise Vinyltrimethyloxysilan, Vinyldimethoxymethylsilan, Vinyltriethoxysilan, Vinyltris(2-methoxyethoxy)silan, N-Cyclohexyl-3-aminopropyltrimethoxysilan, 3-Aminopropyl-trimethoxysilan, Methyltrimethoxysilan, Methyltlriethoxysilan, Dimethyldimethoxysilan, Dimethyldiethoxysilan, Trimethylethoxysilan, Isooctyltrimethoxysilan, Isooctyltriethoxysilan, Hexadecyltrimethoxysilan oder (Octadecyl)methyldimethoxysilan in Betracht. Weitere Füllstoffaktivatoren stellen zum Beispiel grenzflächenaktive Substanzen wie Triethanolamin und Ethylenglycole mit Molekulargewichten von 74 bis 10 000 g/mol dar. Die Menge an Füllstoffaktivatoren beträgt üblicherweise 0 bis 10 phr, bezogen auf 100 phr des Nitrilkautschuks.

Als **Alterungsschutzmittel** können den vulkanisierbaren Mischungen diejenigen zugesetzt werden, die bereits im Zusammenhang mit der Latexkoagulation in dieser Anmeldung beschrieben werden. Sie werden üblicherweise in Mengen von ca. 0 bis 5 phr, bevorzugt 0,5 bis 3 phr, bezogen auf 100 phr des Nitrilkautschuks eingesetzt.

Als **Formtrennmittel** kommen z.B. gesättigte oder teilweise ungesättigte Fett- und Ölsäuren und deren Derivate (Fettsäureester, Fettsäuresalze, Fettalkohole, Fettsäureamide), die vorzugsweise als Mischungsbestandteil Verwendung finden, weiterhin auf die Formoberfläche applizierbare Produkte, wie beispielsweise Produkte auf Basis von niedermolekularen Silikonverbindungen, Produkte auf Basis von Fluorpolymeren sowie Produkte auf Basis von Phenolharzen in Betracht.

Die Formtrennmittel werden als Mischungsbestandteil in Mengen von ca. 0 bis 10 phr, bevorzugt 0,5 bis 5 phr, bezogen auf 100 phr des Nitrilkautschuks eingesetzt.

Auch die Verstärkung mit Festigkeitsträgern (Fasern) aus Glas, nach der Lehre von US-A-4,826,721 ist möglich sowie die Verstärkung durch Corde, Gewebe, Fasern aus aliphatischen und aromatischen Polyamiden (Nylon®, Aramid®), Polyestern und Naturfaserprodukten.

Das Mischen der Komponenten zwecks Herstellung der vulkanisierbaren Mischungen erfolgt typischerweise entweder im Innenmischer oder auf einer Walze. Als Innenmischer werden üblicherweise solche mit sogenannter "ineinandergreifender" Rotorgeometrie verwendet. Zum Startzeitpunkt erfolgt die Beschickung des Innenmischers mit dem erfindungsgemäßen Nitrilkautschuk. Dieser liegt üblicherweise in Ballenform vor und wird dabei zunächst zerkleinert. Nach einem geeigneten Zeitraum, den der Fachmann problemlos festlegen kann, erfolgt die Zugabe des Vernetzers, des/der Füllstoffe und Additive. Das Mischen erfolgt unter Kontrolle der Temperatur mit der Maßgabe, dass das Mischgut für eine geeignete Zeit bei einer Temperatur im Bereich von 100 bis 150°C verbleibt. Nach einem weiteren geeigneten Mischzeitraum erfolgt die Zugabe weiterer Mischungsbestandteile wie z.B. der Antioxidantien, Weichmacher, Weisspigmenten (z.B. Titandioxid), Farbstoffen und sonstigen Verarbeitungs-wirkstoffe. Nach einem weiteren geeigneten Mischzeitraum wird der Innenmischer gelüftet und der Schacht gereinigt. Nach einem weiteren Zeitraum wird der Innenmischer unter Erhalt der vulkanisierbaren Mischung entleert. Alle vorgenannten Zeiträume bewegen sich üblicherweise im Bereich einiger Minuten und können vom Fachmann problemlos in Abhängigkeit von der herzustellenden Mischung festgelegt werden. Werden Walzen als Mischaggregat verwendet, kann in analoger Weise und Reihenfolge bei der Zudosierung vorgegangen werden.

**Gegenstand der Erfindung** ist ferner ein **Verfahren zur Herstellung von Vulkanisaten** auf Basis der erfindungsgemäßen Nitrilkautschuke, dadurch gekennzeichnet, dass die vulkanisierbaren Mischungen enthaltend den erfindungsgemäßen Nitrilkautschuk der Vulkanisation unterworfen werden. Üblicherweise erfolgt die Vulkanisation bei Temperaturen im Bereich von 100°C bis 200°C, bevorzugt bei Temperaturen von 120°C bis 190°C und ganz besonders bevorzugt von 130°C bis 180°C.

Die vulkanisierbare Mischung wird dafür mittels Extrudern, Spritzgussanlagen, Walzen oder Kalandern weiterverarbeitet. Die so erhältliche vorgeformte Masse wird anschließend typischerweise in Pressen, Autoklaven, Heißluftanlagen oder in sogenannten automatischen Mattenvulkanisationsanlagen ausvulkanisiert, wobei sich Temperaturen im Bereich von 120°C bis 200°C, bevorzugt 140°C bis 190°C bewährt haben. Die Vulkanisationszeit beträgt typischerweise 1 Minute bis 24 Stunden und bevorzugt 2 Minuten bis 1 Stunde. Abhängig von der Form und der Größe der Vulkanisate kann eine zweite Vulkanisation durch erneutes Erhitzen notwendig sein, um eine vollständige Vulkanisation zu erreichen.

**Gegenstand der Erfindung** sind entsprechend die so erhältlichen **Vulkanisate auf Basis der erfindungsgemäßen Nitrilkautschuke**. Diese Vulkanisate können die Form eines Riemen, von Walzenbelägen, einer Dichtung, einer Kappe, eines Stopfen, eines Schlauchs, von Bodenbelag, von Dichtungsmatten oder -platten, Profilen oder Membranen aufweisen. Speziell kann es sich um eine O-Ringdichtung, eine Flachdichtung, einen Wellendichtring, eine Dichtmanschette, eine Dichtkappe, eine Staubschutzkappe, eine Steckerdichtung, einen Thermoisolierschlauch (mit und ohne PVC-Zusatz), einen Ölkühlerschlauch, einen Luftansaugschlauch, einen Servolenkschlauch, eine Schuhsohle oder - teile davon oder eine Pumpenmembran handeln. Ganz besonders eignen sich die erfindungsgemäßen Nitrilkautschuke mit dem geringen Emissionsquotienten zur Herstellung von Bodenbelägen.

## BEISPIELE:

### I Bestimmung des Gehalts der flüchtigen Bestandteile

Die Emissionen der flüchtigen Bestandteile im Sinne der Formel (I) werden in einer TDS-GC/MS Untersuchung nach VDA 278 Empfehlung (Version 09.2002) zwischen 28,4 und 34,0 min detektiert und auf eine Emission von "mg/kg Nitrilkautschuk" bezogen. Gearbeitet wurde mit einer Trennsäule DB-5MS mit 60m x 0,25 mm, 1,00μm (5% Phenyl)-methylsiloxan; Ofen-Temperatur 40°C, 1min bis 280°C, 5°C/min.

### II Herstellung der Nitrilkautschuke A bis J

**(Erfindungsgemäße Beispiele sowie Vergleichsbeispiele)**

Die Herstellung der in den folgenden Beispielen eingesetzten Nitrilkautschuke A bis J erfolgte mit den in Tabelle 1 angegebenen Rezepturen und Polymerisationsbedingungen, wobei sämtliche Einsatzstoffe in Gew.-Teilen bezogen auf 100 Gew.-Teile der Monomermischung angegeben sind.

Die Polymerisation erfolgte diskontinuierlich in einem 5L-Autoklaven mit Rührwerk. Bei den Autoklavenansätzen wurden jeweils 1,25 kg der Monomermischung und eine Gesamtwassermenge von 2,1 kg sowie EDTA in einer äquimolaren Menge bezogen auf das Fe-II verwendet. Von der Wassermenge wurden 1,9 kg mit dem Emulgator im Autoklaven vorgelegt und mit einem Stickstoffstrom gespült. Danach wurden die entstabilisierten Monomeren und die in Tabelle 1 angegebene Menge des erfindungsgemäßen oder nicht-erfindungsgemäßen Molekulargewichtsreglers zugegeben und der Reaktor verschlossen. Nach der Thermostatisierung des Reaktorinhalts wurden die Polymerisationen durch die Zugabe wässriger Lösungen von Eisen(II)salzen (in Form von Prämix-Lösungen) und von para-Menthanhydroperoxid (Trigonox® NT50) gestartet.

Die Prämix-Lösung enthielt 0,986 g $Fe(II)SO_4 * 7 H_2O$ und 2,0 g Rongalit C auf 400g Wasser.

Der Polymerisationsverlauf wurde durch gravimetrische Umsatzbestimmungen verfolgt. Bei Erreichen der in Tabelle 1 angegebenen Umsätze wurde die Polymerisation durch Zugabe einer wässrigen Lösung von Diethylhydroxylamin abgestoppt. Nicht umgesetzte Monomere wurden mittels Wasserdampfdestillation entfernt.

Vor der Koagulation des jeweiligen NBR-Latex wurde dieser jeweils mit einer 50%igen Dispersion von Vulkanox® BKF (0,3 Gew. % Vulkanox® BKF bezogen auf NBR-Feststoff) versetzt. Anschließend wurde koaguliert, gewaschen und die erhaltenen Krümel getrocknet.

Die getrockneten NBR-Kautschuke wurden durch die Mooney-Viskosität ML 1+4@ 100°C gemäß ASTM D 1646 und den ACN-Gehalt charakterisiert. Bestimmt wurde ferner der Gehalt der flüchtigen Bestandteile wie oben unter Punkt I angegeben, der für die Berechnung des **Emissionsquotienten E** gemäß der Formel (I) erforderlich ist.

**Tabelle 1:**

| Nitrilkautschuk | A | B | C | D | E | F | G | H | I | J |
|---|---|---|---|---|---|---|---|---|---|---|
| | **Vergleich** | **Vergleich** | **Vergleich** | **Vergleich** | | **Vergleich** | | **Vergleich** | | |
| **Butadien** [Gew.% bzgl. Summe der Monomeren] (Gesamt/Inkrement[1)]) | 65 | 65 | 65 | 65 | 65 | 73 | 73 | 36/10 | 36/10 | 36/10 |
| **Acrylnitril** [Gew.% bzgl. Summe der Monomeren] (Gesamt/Inkrement[2)]) | 35/9 | 35/9 | 35/9 | 35/9 | 35/9 | 27/9 | 27/9 | 64 | 64 | 64 |
| **Gesamt-Wassermenge** | 200 | 200 | 200 | 200 | 200 | 170 | 170 | 170 | 170 | 170 |
| **Ölsäure** | 1.5 | 1.5 | 1.5 | 1.5 | 1.5 | 1.4 | 1.4 | 1.4 | 1.4 | 1.4 |
| **Harzsäure[3)]** | 0.6 | 0.6 | 0.6 | 0.6 | 0.6 | 0.6 | 0.6 | 0.6 | 0.6 | 0.6 |
| **AOS[4)]** | 0.2 | 0.2 | 0.2 | 0.2 | 0.2 | 0.4 | 0.4 | 0.4 | 0.4 | 0.4 |
| **Sulfole® 120 (TDM)[5)]** (Gesamt/Inkrement[2)]) | 0,650/0,228 | | | 0,650/0,230 | | 0,420 | | 0,600 | | |
| **Sulfole® 100[6)]** (Gesamt/Inkrement[2)]) | | 0,400/0,140 | | | 0,450/0,158 | | | | 0,420 | |
| **Sulfole® 90[7)]** (Gesamt/Inkrement[2)]) | | | 0,350/0,123 | | | | 0,250 | | | 0,385 |
| **p-Menthanhydroperoxid** | 0,02 | 0,02 | 0,02 | 0,02 | 0,02 | 0,02 | 0,02 | 0,02 | 0,02 | 0,02 |
| **Prämix $FeSO_4$[8)]** | 0,05 | 0,05 | 0,05 | 0,05 | 0,05 | 0,015 | 0,015 | 0,090 | 0,075 | 0,075 |
| **Diethylhydroxylamin** | 0,4 | 0,4 | 0,4 | 0,4 | 0,4 | 0,15 | 0,15 | 0,15 | 0,15 | 0,15 |
| **Vulkanoxl® BKF[9)]** | 0,3 | 0,3 | 0,3 | 0,3 | 0,3 | 0,1 | 0,1 | 0,1 | 0,1 | 0,1 |
| | | | | | | | | | | |
| **PH[10)]** | 11,0±1,0 | 11,0±1,0 | 11,0±1,0 | 11,0±1,0 | 11,0±1,0 | 11,0±1,0 | 11,0±1,0 | 11,0±1,0 | 11,0±1,0 | 11,0±1,0 |
| **Polymerisationstemperatur [°C]** | 11,5±1,5 | 11,5±1,5 | 11,5±1,5 | 11,5±1,5 | 11,5±1,5 | 11,5±1,5 | 11,5±1,5 | 11,5±1,5 | 11,5±1,5 | 11,5±1,5 |
| **Polymerisationsumsatz [%]** | 56 | 58 | 56 | 79 | 78 | 80 | 78 | 71 | 68 | 69 |

(fortgesetzt)

| Nitrilkautschuk | A | B | C | D | E | F | G | H | I | J |
|---|---|---|---|---|---|---|---|---|---|---|
| | **Vergleich** | **Vergleich** | **Vergleich** | **Vergleich** | | **Vergleich** | | **Vergleich** | | |
| **Polymerisationszeit [h]** | 5,5 | 7,25 | 7,5 | 6 | 6,25 | 5,75 | 6,0 | 3,5 | 3,75 | 5,0 |

1) Die Zugabe des Inkrementes erfolgte bei einem Monomerumsatz von 52%
2) Die Zugabe des Inkrementes erfolgte bei einem Monomerumsatz von 36%
3) Na Salz der disproportionierten Harzsäure, CAS 61790-51-0
4) AOS: Natrium $\alpha$ Olefin sulfonat
5) Sulfole® 120: t-DDM (tertiäres Dodecylmercaptan); Chevron Philipps Chemicals
6) Sulfole® 100: (Gemisch aus tertiärem Dodecyl- und tertiärem Nonylmercaptan); Chevron Philipps Chemicals
7) Sulfole® 90: (tertiäres Nonylmercaptan); Chevron Philipps Chemicals
8) enthaltend das Reduktionsmittel Rongalit® C (Natriumsalz eines Sulfinsäurederivates) sowie das Fe(II)$SO_4$.
9) 2-[(2-Hydroxy-5-methyl-3-tert-butyl-phenyl)methyl]-4-methyl-6-tert-butyl-phenol; Lanxess Deutschland GmbH
10) gemessen zu Beginn der Polymerisation

**Tabelle 2:**

| Nitrilkautschuk | Vergleich A | Vergleich B | Vergleich C | Vergleich D | E | Vergleich F | G | Vergleich H | I | J |
|---|---|---|---|---|---|---|---|---|---|---|
| ACN-Gehalt (Gew.%) | 35,0 | 35,3 | 34,7 | 34,1 | 34,1 | 28,0 | 28,5 | 49,6 | 50,5 | 49,6 |
| Mooney Viskosität (ML 1+4@100°C) | 57 | 50 | 38 | 36 | 48 | 65 | 63 | 76 | 80 | 83 |
| Flüchtige Bestandteile (mg/k)[2)] | 464 | 70 | 31 | 177 | 26 | 134 | 31 | 40 | 27 | 6 |
| Emissionsquotient E (mg/(kg Mu))[3)] | 2,85 | 0,49 | 0,28 | 1,68 | 0,18 | 0,58 | 0.14 | 0,26 | 0,17 | 0,04 |

1) Mittelwert aus doppelter TDS-GC/MS Untersuchung nach VDA 278 Empfehlung (09.2000)
2) Emissionen der Reglerbestandteile der TDS-GC/MS Untersuchung nach VDA 278 Empfehlung (Version 09.2000) zwischen 28,4 und 34,0 min
3) Emissionsquotient E bestimmt gemäß allgemeiner Formel (I)

**Tabelle 2** zeigt eindeutig, dass mit dem erfindungsgemäßen Verfahren durch Einsatz der speziellen Molekulargewichtsregler bei gleichzeitiger Einhaltung der Bedingung, dass der Polymerisationsumsatz 60% oder mehr betragen muss, Polymere erhalten werden, die sich eindeutig von denjenigen Nitrilkautschuken unterscheiden, die unter Einsatz eines gewöhnlichen tert-Dodecylmercaptans und/oder geringeren Umsätzen erhalten wurden, indem sie deutlich geringe VOC Werte und Regleremissionen in TDS GC/MS Untersuchungen zeigen.

**III Herstellung von Vulkanisaten der Nitrilkautschuke A bis F**

**(Erfindungsgemäße Beispiele sowie Vergleichsbeispiele)**

Gemäß der unten beschriebenen Methode wurden aus den Nitrilkautschuken D bis J die Vulkanisate V1 bis V7 hergestellt. Die Menge der Mischungsbestandteile sind auf 100 Gewichtsteile Kautschuk bezogen und in **Tabelle 3** angegeben.

**Tabelle 3: Kautschukmischungen**

| **Mischung** | **V1** | **V2** | **V3** | **V4** | **V5** | **V6** | **V7** |
|---|---|---|---|---|---|---|---|
| | **Vergleich** | | **Vergleich** | | **Vergleich** | | |
| Polymer D | 100 | | | | | | |
| Polymer E | | 100 | | | | | |
| Polymer F | | | 100 | | | | |
| Polymer G | | | | 100 | | | |
| Polymer H | | | | | 100 | | |
| Polymer I | | | | | | 100 | |
| Polymer J | | | | | | | 100 |
| **Weitere Mischungsbestandteile** | | | | | | | |
| Ruß IRB 7[1)] | 40 | 40 | 40 | 40 | 40 | 40 | 40 |
| Edenor® C 18 98-100[2)] | 1 | 1 | 1 | 1 | 1 | 1 | 1 |
| SULFUR SPIDER[3)] | 1,54 | 1,54 | 1,54 | 1,54 | 1,54 | 1,54 | 1,54 |
| VULKACIT® NZ/EGC[4)] | 0,7 | 0,7 | 0,7 | 0,7 | 0,7 | 0,7 | 0,7 |
| IRM 91[5)] | 3 | 3 | 3 | 3 | 3 | 3 | 3 |

[1)] IRB 7: Ruß (Sid Richardson Carbon Co.)
[2)] Edenor® C 18 98-100: Stearinsäure (Caldic)
[3)] SULFUR SPIDER: Schwefel ($S_8$) (Krahn Chemie GmbH)
[4)] VULKACIT® NZ/EGC: N-tert.-Butyl-2-benzothiazolsulfenamid (TBBS) (Lanxess Deutschland GmbH)
[5)] IRM 91: Zink(II)oxid: (Midwest Zinc)

Die Mischungen wurden in einem Banbury Mixer hergestellt. Hierzu wurden der Nitrilkautschuk und alle in **Tabelle 3** genannten Zuschlagstoffe insgesamt 4 Minuten bei einer maximalen Temperatur von bis zu 120 °C gemischt. Der Kautschuk wurde hierzu im Mischer vorgelegt, nach 1 Minute alle weiteren Zuschlagstoffe hinzugegeben und nach 2 weiteren Minuten ein Kehrschritt durchgeführt. Nach insgesamt 4 Minuten wurde der Kautschuk aus dem Mischer ausgeworfen. Die erhaltenen Vulkanisate hatten die in **Tabelle 4** angegebenen Eigenschaften.

Das Vulkanisationsverhalten der Mischungen wurde nach ASTM D 5289 -95 bei 160°C mit Hilfe des Moving Die Rheometers MDR2000 der Firma Alpha Technology untersucht. Auf diese Weise wurden die folgenden charakteristische Vulkameterwerte bestimmt.

Hierbei bedeuten:

| | |
|---|---|
| Min. Drehmoment: | Vulkameteranzeige im Minimum der Vernetzungsisotherme |
| Max. Drehmoment: | Maximum der Vulkameteranzeige |
| TS01: | bedeutet die Zeit in Minuten, in der die Mooney Viskosität der Mischung um eine Mooneyeinheit gegenüber dem Startwert ansteigt |

$t_{10}$: Zeitpunkt, bei dem 10% des Endumsatzes/vulkanisationsgrads erreicht sind
$t_{50}$: Zeitpunkt, bei dem 50% des Endumsatzes/vulkanisationsgrads erreicht sind
$t_{90}$: Zeitpunkt, bei dem 90% des Endumsatzes/vulkanisationsgrads erreicht sind

**Tabelle 4: Vulkanisationsverhalten**

| Mischung | V1 Vergleich | V2 | V3 Vergleich | V4 | V5 Vergleich | V6 | V7 |
|---|---|---|---|---|---|---|---|
| **MDR (160°C/30min)** | | | | | | | |
| Min. Drehmoment(dNm) | 1,3 | 1,8 | 2,8 | 2,9 | 2,1 | 2,2 | 2,5 |
| Max. Drehmoment(dNm) | 15,9 | 18,8 | 18,3 | 19,2 | 21,7 | 22,2 | 24,4 |
| TS01 (min) | 2,7 | 2,6 | 2,5 | 2,3 | 1,9 | 1,8 | 1,5 |
| $t_{10}$ (min) | 2,8 | 2,9 | 2,8 | 2,6 | 2,2 | 2,0 | 1,8 |
| $t_{50}$ (min) | 3,8 | 3,6 | 3,5 | 3,1 | 4,3 | 4,3 | 3,6 |
| $t_{90}$ (min) | 10,8 | 9,5 | 6,1 | 5,7 | 18,5 | 18,5 | 18,3 |

Gegenüber den jeweiligen Vergleichsbeispielen V1, V3 und V5 zeichnen sich die Mischungen V2, V4, V6 und V7, die auf erfindungsgemäßen Nitrilkautschuken basieren, durch ein höheres maximales Drehmoment in der Vulkanisation aus, welches eine wichtige Kenngröße für das Vulkanisationsverhalten darstellt. Die daraus resultierende höhere Vernetzungsdichte ermöglicht es dem Anwender, die Menge der Einsatzstoffe für die Vernetzung zu verringern, um auf eine equivalente Vernetzungsdichte wie bei den Vergleichsbeispielen zu kommen.

**Patentansprüche**

1. Nitrilkautschuk enthaltend Wiederholungseinheiten mindestens eines $\alpha,\beta$-ungesättigten Nitril-Monomeren und mindestens eines konjugierten Dien Monomeren, **dadurch gekennzeichnet, dass** er einen **Emissionsquotienten E** gemäß der Formel (I) von kleiner oder gleich 0,25 mg/(kg*Mooney Einheiten) aufweist,

$$E = \frac{[\text{flüchtige Bestandteile}]}{[\text{Mooney Viskosität}]} \times \frac{[\text{Nitrilgehalt}]}{100} \qquad (I)$$

worin

[flüchtige Bestandteile] die Konzentration an flüchtigen Bestandteilen in mg/kg Nitrilkautschuk darstellt, die durch eine TDS-GC/MS Untersuchung nach VDA 278 Empfehlung (Version 09.2002) zwischen 28,4 min und 34,0 min bestimmt werden,
[Mooney-Viskosität] die nach ASTM D 1646 bestimmte Mooney-Viskosität ML 1+4 bei 100°C des Nitrilkautschuks, angegeben in Mooney-Einheiten, darstellt, und
[Nitrilgehalt] den Gehalt des $\alpha,\beta$-ungesättigten Nitrils im Nitrilkautschuk in Gew.%, bestimmt gemäß DIN 53 625 nach Kjeldahl, darstellt.

2. Nitrilkautschuk gemäß Anspruch 1, wobei der Emissionsquotient E gemäß der Formel (I) kleiner oder gleich 0,22 mg/(kg*Mooney Einheiten) und besonders bevorzugt kleiner oder gleich 0,20 mg/(kg*Mooney Einheiten) ist.

3. Nitrilkautschuk gemäß Anspruch 1 oder 2, der zusätzlich noch Wiederholungseinheiten von einem oder mehreren weiteren copolymerisierbaren Monomeren aufweist.

4. Nitrilkautschuk gemäß einem der Ansprüche 1 bis 3, wobei das mindestens eine konjugierte Dien ausgewählt ist aus ($C_4$-$C_6$) konjugierten Dienen und Gemischen davon, bevorzugt aus 1,2-Butadien, 1,3-Butadien, Isopren, 2,3-Dimethylbutadien, Piperylen und Gemische daraus und besonders bevorzugt 1,3-Butadien darstellt.

5. Nitrilkautschuk gemäß einem der Ansprüche 1 bis 4, wobei das mindestens eine $\alpha,\beta$-ungesättigtes Nitril ausgewählt

ist aus ($C_3$-$C_5$)-$\alpha,\beta$-ungesättigten Nitrilen und Gemischen davon, bevorzugt aus Acrylnitril, Methacrylnitril, Ethacrylnitril und Mischungen davon und besonders bevorzugt Acrylnitril darstellt.

**6.** Nitrilkautschuk gemäß einem der Ansprüche 1 bis 5 mit einer Mooney-Viskosität ML 1+4 bei 100°C von 10 bis 150 Mooney Einheiten (MU), vorzugsweise von 20 bis 100 MU.

**7.** Verfahren zur Herstellung von Nitrilkautschuken gemäß einem der Ansprüche 1 bis 6 durch Emulsionspolymerisation mindestens eines $\alpha,\beta$-ungesättigten Nitril-Monomeren und mindestens eines konjugierten Dien-Monomeren, **dadurch gekennzeichnet, dass** die Emulsionspolymerisation in Gegenwart von tertiärem Nonylmercaptan als Molekulargewichtsregler bis zu einem Umsatz von mindestens 60 Gew.%, bevorzugt von 60% bis 98%, besonders bevorzugt von 62 bis 95% und insbesondere von 65 bis 95%, bezogen auf die Summe der eingesetzten Monomeren, durchgeführt wird.

**8.** Verfahren gemäß Anspruch 7, wobei der Molekulargewichtsregler in Form des tertiären Nonylmercaptan entweder

a) in Form von tert.-Nonylmercaptan mit einer Reinheit von mindestens 95 Gew.%, bevorzugt mindestens 97 Gew.% zum Einsatz kommt oder aber
b) in Form eines Gemischs, das mindestens 50 Gew.% aber weniger als 95 Gew.% tert.-Nonylmercaptan enthält sowie ein oder mehrere weitere isomere Nonylmercaptane und/oder ein oder mehrere weitere $C_{10}$-$C_{16}$ Alkylthiole enthält.

**9.** Verfahren gemäß Anspruch 7 oder 8, wobei der Molekulargewichtsregler in einer Menge von 0,05 bis 3 Gew.-Teilen, vorzugsweise von 0,1 bis 1,5 Gew.-Teilen bezogen auf 100 Gew.-Teile der Monomermischung eingesetzt wird.

**10.** Vulkanisierbare Mischung enthaltend den Nitrilkautschuk gemäß einem der Ansprüche 1 bis 6 und mindestens einen Vernetzer.

**11.** Vulkanisierbare Mischung gemäß Anspruch 10, die zusätzlich ein oder mehrere Füllstoffe enthält und keines, eines oder mehrere zusätzliche Additive, bevorzugt ausgewählt aus der Gruppe der Füllstoffaktivatoren, Ozonschutzmittel, Alterungsschutzmittel, Antioxidationsmittel, Verarbeitungshilfsmittel, Extenderöle, Weichmacher, Verstärkungsmaterialien und Formtrennmittel.

**12.** Verfahren zur Herstellung der vulkanisierbaren Mischung gemäß Anspruch 10 oder 11, indem man den Nitrilkautschuk, den mindestes einen Vernetzer und kein, ein oder mehrere weitere Additive miteinander mischt, bevorzugt in einem Innenmischer oder auf einer Walze.

**13.** Verfahren zur Herstellung von Vulkanisaten, indem man eine vulkanisierbare Mischung gemäß Anspruch 10 oder 11 einer Vulkanisation unterwirft, bevorzugt bei einer Temperatur im Bereich von 100°C bis 200°C, bevorzugt von 120°C bis 190°C und ganz besonders bevorzugt von 130°C bis 180°C.

**14.** Vulkanisate auf Basis von Nitrilkautschuken gemäß einem der Ansprüche 1 bis 6.

**15.** Vulkanisate gemäß Anspruch 14, wobei es sich um ein Formteil handelt, bevorzugt einen Riemen, einen Walzenbelag, eine Dichtung, eine Kappe, einen Stopfen, einen Schlauch, einen Bodenbelag, Dichtungsmatten oder -platten, Profile oder Membrane.

Europäisches Patentamt
European Patent Office
Office européen des brevets

# EUROPÄISCHER RECHERCHENBERICHT

Nummer der Anmeldung
EP 13 29 0246

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>A | EP 2 368 916 A1 (LANXESS INT SA [CH]; LANXESS DEUTSCHLAND GMBH [DE]) 28. September 2011 (2011-09-28)<br>* Ansprüche 1-3; Abbildungen 1-6 *<br>----- | 1-6,14, 15<br><br>7-13 | INV.<br>C08C1/14<br>C08K5/37<br>C08F36/06 |
| X<br><br>A | DE 10 2007 024011 A1 (LANXESS DEUTSCHLAND GMBH [DE]) 27. November 2008 (2008-11-27)<br>* Absätze [0095], [0096], [0171]; Ansprüche 1-3 *<br>----- | 1-6,14, 15<br>7-13 | |
| A | EP 2 471 852 A1 (LANXESS DEUTSCHLAND GMBH [DE]) 4. Juli 2012 (2012-07-04)<br>* das ganze Dokument *<br>----- | 1-15 | |
| X<br><br>A | EP 0 779 301 A1 (NIPPON ZEON CO [JP]) 18. Juni 1997 (1997-06-18)<br>* Anspruch 17; Beispiele 1-20; Tabellen 1-12 *<br>----- | 1-6,14, 15<br>7-13 | |
| X<br><br>A | EP 0 692 496 A1 (NIPPON ZEON CO [JP]) 17. Januar 1996 (1996-01-17)<br>* Anspruch 1; Beispiele 1-6 *<br>----- | 1-6,14, 15<br>7-13 | RECHERCHIERTE SACHGEBIETE (IPC)<br>C08C<br>C08K<br>C08F |

Der vorliegende Recherchenbericht wurde für alle Patentansprüche erstellt

1

| Recherchenort | Abschlußdatum der Recherche | Prüfer |
|---|---|---|
| München | 15. April 2014 | Höfler, Thomas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR. EP 13 29 0246

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

15-04-2014

| Im Recherchenbericht angeführtes Patentdokument | Datum der Veröffentlichung | Mitglied(er) der Patentfamilie | Datum der Veröffentlichung |
|---|---|---|---|
| EP 2368916 A1 | 28-09-2011 | CA 2792840 A1 | 29-09-2011 |
| | | CN 102822205 A | 12-12-2012 |
| | | EP 2368916 A1 | 28-09-2011 |
| | | EP 2550301 A1 | 30-01-2013 |
| | | JP 2013523901 A | 17-06-2013 |
| | | KR 20130027488 A | 15-03-2013 |
| | | TW 201211064 A | 16-03-2012 |
| | | US 2013211031 A1 | 15-08-2013 |
| | | WO 2011117194 A1 | 29-09-2011 |
| DE 102007024011 A1 | 27-11-2008 | AT 478097 T | 15-09-2010 |
| | | CA 2687565 A1 | 27-11-2008 |
| | | CN 101679532 A | 24-03-2010 |
| | | DE 102007024011 A1 | 27-11-2008 |
| | | EP 2152759 A1 | 17-02-2010 |
| | | JP 5289430 B2 | 11-09-2013 |
| | | JP 2010528142 A | 19-08-2010 |
| | | KR 20100022075 A | 26-02-2010 |
| | | RU 2009147303 A | 27-06-2011 |
| | | US 2008293869 A1 | 27-11-2008 |
| | | WO 2008142042 A1 | 27-11-2008 |
| EP 2471852 A1 | 04-07-2012 | CA 2823102 A1 | 05-07-2012 |
| | | CN 103282418 A | 04-09-2013 |
| | | EP 2471852 A1 | 04-07-2012 |
| | | EP 2658909 A1 | 06-11-2013 |
| | | JP 2014504658 A | 24-02-2014 |
| | | KR 20130120501 A | 04-11-2013 |
| | | WO 2012089804 A1 | 05-07-2012 |
| EP 0779301 A1 | 18-06-1997 | KEINE | |
| EP 0692496 A1 | 17-01-1996 | DE 69415969 D1 | 25-02-1999 |
| | | DE 69415969 T2 | 10-06-1999 |
| | | EP 0692496 A1 | 17-01-1996 |
| | | JP 3445615 B2 | 08-09-2003 |
| | | US 5627250 A | 06-05-1997 |
| | | WO 9422924 A1 | 13-10-1994 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 2434536 A
- DD 154702
- EP 0692496 A
- EP 0779301 A
- EP 0779300 A
- WO 2001094432 A
- EP 0799300 A
- WO 2008142042 A
- WO 2008142035 A
- WO 2008142039 A
- WO 2008142037 A
- US 4826721 A

### In der Beschreibung aufgeführte Nicht-Patentliteratur

- Ullmann's Encyclopedia of Industrial Chemistry. VCH Verlagsgesellschaft, 1993, 255-261
- Ullmanns Enzyklopädie der technischen Chemie. vol. 13, 611-612
- *J. Appl. Polym. Sci.,* 1968, vol. 12, 1075-1095
- Ullmann's Encyclopedia ofIndustrial Chemistry. vol. 31, 345-355
- Ullmann's Encyclopedia of Industrial Chemistry. vol. 13, 75-108
- **W. HOFMANN.** *Nitrilkautschuk,* 1965, 58-66